# EUROPÄISCHE PATENTANMELDUNG

(11) **EP 4 292 562 A1**
(43) Veröffentlichungstag der Anmeldung: **20.12.2023**
(21) Anmeldenummer: 22178786.4
(22) Anmeldetag: 13.06.2022
(51) Int. Cl.: A61C 8/00

(54) **VERBINDER-SYSTEM FÜR EIN DENTALIMPLANTAT**

(71) Anmelder: maxon international ag, 6072 Sachseln (CH)
(72) Erfinder: Buurlage, Thorsten, 69517 Groxheimertal (DE); Kullick, JOchen, 77654 Offenburg (DE); Gaddum, Bernd, 76530 Baden-Baden (DE); Fix, Frank, 75196 Remchingen (DE)
(74) Vertreter: IPrime Rentsch Kaelin AG

(57) **Zusammenfassung**

Ein Kopplungsteil (3) zum Verbinden eines Basiskörpers (2) eines Dentalimplantats (1) mit einem Aufbauteil (4) des Dentalimplantats (1) umfasst einen Grundkörper (30), ein Längsloch (31) entlang einer Längsachse (10) des Grundkörpers (30), mindestens ein Rastelement (38, 38', 38", 38‴), welches dazu geeignet ist, mit mindestens einem Gegenrastelement (56) eines in dem Längsloch (31) anordenbaren Verbindungsteils (5) eine rastende Wirkverbindung einzugehen, und einen Auflage-Abschnitt (34) zur dichtenden Auflage des Kopplungsteils (3) auf dem Basiskörper (2).

## Beschreibung

### Technisches Gebiet

Die Erfindung betrifft ein Kopplungsteil für ein modulares Dentalimplantat, eine Baugruppe für ein modulares Dentalimplantat, ein Kit für eine solche Baugruppe, ein modulares Dentalimplantat, sowie ein Kit für ein solches modulares Dentalimplantat.

### Technologischer Hintergrund

Dentalimplantate können einteilig und mehrteilig ausgestaltet sein. Allgemein haben sich mehrteilige Dentalimplantate aufgrund ihrer Vorteile gegenüber einteiligen Dentalimplantaten durchgesetzt. Mehrteilige Dentalimplantate können aufgrund ihrer Modularität besser an die konkret vorgesehene Verwendung angepasst werden. Sie erlauben zudem einen sequenziellen Aufbau des definitiven Implantats, so dass beispielsweise unerwünschten Belastungen während des Einheilungsprozesses vermieden werden können.

Die aus dem Stand der Technik bekannten mehrteiligen Dentalimplantate umfassen in der Regel einen in einen Kieferknochen einzusetzenden Basiskörper, ein am Basiskörper zu befestigendes Aufbauteil und eine auf das Aufbauteil aufzusetzende Suprakonstruktion. Basiskörper und Aufbauteil werden durch ein Verbindungsteil verbunden.

Das Verbindungsteil ist häufig als Gewindebolzen ausgestaltet, welcher in ein Innengewinde des Basiskörpers eingeschraubt das Aufbauteil und den Basiskörper formschlüssig verbindet. Der Gewindebolzen kann an einem vom Gewinde abgewandten koronalen Ende Eingriffsmittel zum Drehen des Gewindebolzens aufweisen. Zum formschlüssigen Fixieren des Aufbauteils dient ein Kopfteil mit grösserem Durchmesser. Dieses kann an den Bolzen angeformt sein. Alternativ kann das Verbindungsteil modular aus einem im Basiskörper einzudrehenden Gewindebolzen und einem am koronalen Ende montierbaren Kopfstück aufgebaut sein, wie beispielhaft in US 2008/0233538 A1 offenbart.

Ebenfalls bekannt sind Verbindungsteile, die im Basiskörper verspreizt werden, um eine formschlüssige Verbindung zu erzielen. Ein solches Dentalimplantat ist beispielsweise in US 2013/0224689 A1 offenbart.

Der Basiskörper, auch Implantatkörper genannt, soll funktional die Zahnwurzel ersetzen und ist meistens zylindrisch oder konisch geformt. In der Regel weist der Basiskörper ein Gewinde auf, über welches der Basiskörper durch Einschrauben im Kieferknochen befestigt werden kann.

Das Aufbauteil, auch Implantataufbau oder Abutment genannt, dient als Zwischenglied zwischen Basiskörper und Suprakonstruktion und wird üblicherweise mit dem Basiskörper formschlüssig verbunden, beispielsweise verschraubt, und/oder verklebt.

Die Suprakonstruktion stellt den eigentlichen Zahnersatz dar, in der Form einer Krone oder Brücke, oder auch einer Prothese. Es ist auch möglich, Aufbauteil und Suprakonstruktion als einteiliges Element auszugestalten, beispielsweise als einteilige Krone. Ein Dentalimplantat kann auch zwei oder mehr Basiskörper zur Verankerung einer Suprakonstruktion aufweisen, beispielsweise bei Brücken und Gebissprothesen. Im letzteren Fall können als Aufbauteile sogenannte Lokatoren verwendet werden, auf denen entsprechende Befestigungspunkte einer Gebissprothese form- und kraftschlüssig befestigt werden.

In der Zahnprothetik werden vorzugsweise möglichst biokompatible und/oder bioinerte Materialien verwendet. Aufgrund ihrer Biokompatibilität häufig verwendet werden Titan oder Titanlegierungen, sowie keramische Materialien wie beispielsweise Zirkoniumoxid-Keramik. Sowohl das Material als auch die Struktur des Basiskörpers sollen einen hohen Grad der Osseointegration und Periointegration ermöglichen. Die vorgenannten Anforderungen bzgl. hoher Biokompatibilität und Bioinertheit gelten auch für das Aufbauteil und die Suprakonstruktion. Weiter stellen die im Gebiss auftretende Kräfte hohe mechanische Anforderungen an Material und Konstruktion. So müssen Dentalimplantate die beim Gebrauch des Gebisses auftretenden hohen Kräfte aufnehmen können, ohne zu brechen, Risse zu bilden oder sich zu lockern.

Der Werkstoff Titan hat den Vorteil, zäh und nicht spröde zu sein. Ein Nachteil von Titan ist jedoch, dass es durch seine dunkelgraue Färbung in der Mundhöhle als Fremdkörper wahrgenommen werden kann. Titan wird deshalb bevorzugt für diejenigen Teile eines Dentalimplantats eingesetzt, welche in der Mundhöhle nicht sichtbar sind, beispielsweise weil sie in den Kiefer eingebettet oder von Zahnfleisch verdeckt sind, oder weil sie innerhalb des Dentalimplantats bzw. der Suprakonstruktion angeordnet sind. In der Regel ist der Basiskörper in den Kiefer eingebettet. Das Aufbauteil kann vom Zahnfleisch und/oder von der Suprakonstruktion abgedeckt sein.

Keramikmaterialien wie Zirkoniumoxid haben gegenüber Titan den Vorteil, dass die Färbung im Wesentlichen der natürlichen Färbung von Zähnen entspricht, so dass entsprechende Teile eines Dentalimplantats nicht als Fremdkörper wahrgenommen werden. Keramikteile werden bevorzugt für den Zahnaufbau und andere in der Mundhöhle sichtbare Teile eingesetzt.

Eine mangelhafte Verbindung zwischen Aufbauteil und Basiskörper kann zur Lockerung oder Beschädigung des Dentalimplantats führen. Für den Langzeiterfolg eines Dentalimplantats ist auch wichtig, dass das Innere eines Dentalimplantates gut und dauerhaft gegen den Aussenraum abgedichtet ist. Undichte Verbindungen ermöglichen das Eindringen von Bakterien in das Implantat, was zu Periimplantitis führen und Kieferknochenschwund verursachen kann.

Der modulare Aufbau von Dentalimplantaten kann zur Folge haben, dass die einzelnen Teile, insbesondere wenn sie aus vergleichsweise sprödem Keramikmaterial gefertigt sind, mechanisch weniger stabil sind als einteilige Implantate, insbesondere gegenüber Scherkräften quer zur Implantat-Achse.

Die Montage von modularen Implantaten kann insbesondere im räumlichen engen Mundhöhlenbereich schwierig sein, weil zwei oder mehr Elemente gleichzeitig platziert werden müssen.

Aus US 2019/0223986 A1 ist ein modulares Dentalimplantat bekannt, umfassend einen Basiskörper und ein Aufbauteil, welche durch ein schraubenartiges Verbindungsteil verbunden werden. Das Dentalimplantat weist zusätzlich einen zylindrische Buchsenkörper auf, welcher mit wenigstens einem Rastelement versehen ist. Das Rastelement ist so ausgestaltet, dass es in ein am Verbindungsteil ausgeformtes Gegenrastelement eingreifen kann, um Buchsenkörper und Verbindungsteil, und damit auch ein zwischen Buchsenkörper und Verbindungsteil formschlüssig fixiertes Aufbauteil, zumindest temporär unverlierbar miteinander zu verbinden. Der zylindrische Buchsenkörper liegt im zusammengebauten Zustand des Dentalimplantats im Inneren des Implantats und verstärkt das Dentalimplantat in einem oberen Bereich gegen Scherkräfte quer zur Längsachse.

Es besteht ein allgemeines Bedürfnis nach Verbesserungen in diesem Gebiet.

### Darstellung der Erfindung

Eine Aufgabe der Erfindung ist es, ein modulares Dentalimplantat-System zur Verfügung zu stellen, welches einen flexibleren Aufbau aus den einzelnen Bauteilen erlaubt, um insbesondere das Dentalimplantat einfach an die spezifischen Gegebenheiten des vorgesehenen Einsatzes anpassen zu können.

Erfindungsgemässe Dentalimplantate sollen im Einsatz sicher und verlässlich sein. Sie sollen weiter kostengünstig herstellbar sein.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor. Die erfindungsgemässe Lösung kann durch verschiedene, jeweils für sich vorteilhafte und, sofern nicht anders ausgeführt, beliebig miteinander kombinierbare Ausgestaltungen weiter verbessert werden.

Auf diese Ausführungsformen und die mit ihnen verbundenen Vorteile ist im Folgenden eingegangen.

Ein erster Aspekt der Erfindung betrifft ein Kopplungsteil zum Verbinden eines Basiskörpers eines Dentalimplantats mit einem Aufbauteil des Dentalimplantats.

Ein solches erfindungsgemässes Kopplungsteil umfasst einen Grundkörper, ein Längsloch entlang einer Längsachse des Grundkörpers, mindestens ein Rastelement, welches dazu geeignet ist, mit mindestens einem Gegenrastelement eines in dem Längsloch anordenbaren Verbindungsteils eine rastende Wirkverbindung einzugehen, und einen Auflage-Abschnitt zur dichtenden Auflage des Kopplungsteils auf dem Basiskörper.

Durch das Kopplungsteil kann eine standardisierte Verbindung zwischen einem beliebigen Basiskörpers eines Dentalimplantats und einem beliebigen Aufbauteil des Dentalimplantates, bereitgestellt werden. Das Aufbauteil kann beispielsweises eine Suprastruktur, eine Zahnkrone, eine Gebissprothese, ein Locator, ein Abutment oder eine Healing-Komponente wie beispielsweise einen Gingivaformer umfassen. Durch ein Verbindungsteil bspw. eine Schraube kann das Aufbauteil und der Basiskörper miteinander verbunden werden. Zum Verbinden der Teile kann der Verbinder durch das Aufbauteil und anschliessen durch das Längsloch des Kopplungsteils geführt werden. Im zusammengebauten Zustand des Dentalimplantates, ist der Verbinder ferner mit dem Basiskörper verbunden und verbindet damit das Aufbauteil und das Kopplungsteil mit dem Basiskörper.

Der Verbinder kann so weit durch das Längsloch des Kopplungsteils geführt werden, bis das mindestens eine Rastelement des Kopplungsteils an dem mindestens einen Gegenrastelement des Verbinders einrastet, sodass der Verbinder und das Kopplungsteil zumindest temporär miteinander verbunden sind. Durch die eingerastete Wirkverbindung werden das Kopplungsteil der Verbinder und das Aufbauteil zusammengehalten. Dies erleichtert den Einbau und erhöht die Sicherheit beim Einbau der Teile in der Mundhöhle. Insbesondere wenn die Teile im Bereich des unteren Kieferknochens einzubauen sind, da ansonsten aufgrund der Schwerkraft das Kopplungsteil einfach vom Verbinder abrutschen kann.

Eine dichte Auflage des Kopplungsteils auf dem Basiskörper stellt einen dauerhaft dichten Verschluss des Innenraums eines fertig montierten Dentalimplantats vom Aussenraum sicher, und verhindert so das Eindringen von Keimen in das Implantat. Ebenso können keine Fremdstoffe, beispielsweise Abrieb, aus dem Dentalimplantat in den Aussenraum und damit in den Körper des Implantatträgers gelangen.

In einer vorteilhaften Ausführungsform eines erfindungsgemässen Kopplungsteils ist der Auflage-Abschnitt am Grundkörper des Kopplungsteils als plane Fläche senkrecht zur Längsachse des Grundkörpers ausgestaltet.

Die senkrecht zur Längsachse liegende Fläche kann Druckkräfte, welche durch das Kauen mit dem Dentalimplantat entstehen, gut vom Aufbauteil und dem Kopplungsteil auf den Basiskörper übertragen. Bei einer grösseren oder zweistufigen planen Fläche kann der Auflagepunkt möglichst von der Längsachse entfernt, zur Mundhöhle hin liegen. Dadurch wird das Eindringen von Bakterien und Speiseresten in das Implantat oder Teile des Implantates verhindert.

In einer anderen vorteilhaften Ausführungsform eines erfindungsgemässen Kopplungsteils ist der Auflage-Abschnitt am Grundkörper des Kopplungsteils als Mantelfläche eines zur Längsachse fluchtenden geraden Kegelstumpfs ausgestaltet.

In einer weiteren vorteilhaften Ausführungsform eines erfindungsgemässen Kopplungsteils ist der der Auflage-Abschnitt am Grundkörper des Kopplungsteils als Mantelfläche eines zur Längsachse fluchtenden gekrümmten Kegelstumpfs ausgestaltet.

Die konische beziehungsweise gekrümmt konische Mantelfläche des Auflage-Abschnitt des Grundkörpers eines solchen Kopplungsteils ist dazu vorgesehen, in einer entsprechend geformten gerade konischen beziehungsweise gekrümmt konischen Aufnahme eines Basiskörpers aufgenommen zu werden. Die konische Mantelfläche und die konische Aufnahme sind dabei so dimensioniert, dass bei einer Verspannung des Kopplungsteils und des Basiskörpers entlang der Längsachse eine Auflage der beiden konischen Mantelflächen resultiert. Die Auflage kann eine flächige oder eine ringförmige Auflage sein. Das Kopplungsteil ist im Basiskörper radial fixiert. Durch die Auflage wird ein bakteriendichter Übergang zwischen dem Kopplungsteil und dem Basiskörper erzeugt.

In noch einer anderen vorteilhaften Ausführungsform eines erfindungsgemässen Kopplungsteils ist der der Auflage-Abschnitt am Grundkörper des Kopplungsteils als Mantelfläche einer zur Längsachse fluchtenden konischen Vertiefung im Grundkörper ausgestaltet. Die konische Vertiefung kann wiederum die Form eines geraden Kegels oder eines gekrümmten Kegels haben.

Die konische beziehungsweise gekrümmt konische Mantelfläche des Auflage-Abschnitt des Grundkörpers eines solchen Kopplungsteils ist dazu vorgesehen, einen entsprechend geformten geraden Kegelstumpf beziehungsweise gekrümmten Kegelstumpf eines Basiskörpers aufzunehmen. Die konische Mantelfläche und die konische Aufnahme sind dabei so dimensioniert, dass bei einer Verspannung des Kopplungsteils und des Basiskörpers entlang der Längsachse eine flächige Auflage der beiden konischen Mantelflächen resultiert. Das Kopplungsteil ist im Basiskörper radial fixiert.

Vorteilhaft ist bei einem erfindungsgemässen Kopplungsteil ein in Form einer planen Fläche ausgestalteter Auflage-Abschnitt an einem apikalen Längsende des Kopplungsteils angeordnet. Dadurch werden Kräfte, welche beim Kauen mit dem Implantat auftreten direkt senkrecht in den Basiskörper abgeleitet.

Weiter vorteilhaft liegt der Auflageabschnitt möglichst von der Längsachse des Dentalimplantates entfernt. Der Auflageabschnitt sollte nahe an der Aussenseite des Implantates, zur Mundhöhle hin, liegen. Dadurch wird das Eindringen von Bakterien und Speiseresten in das Implantat oder Teile des Implantates verhindert.

Das erfindungsgemässe Kopplungsteil bildet die Schnittstelle zwischen dem Basiskörper und dem Aufbauteil eines Dentalimplantats. Dies hat den Vorteil, dass keine direkte Schnittstelle zwischen Basiskörper und Aufbauteil notwendig ist, sondern stattdessen das erfindungsgemässe Kopplungsteil die passende Schnittstelle zum Basiskörper beziehungsweise zum Aufbauteil bereitstellt. So ist es beispielsweise möglich, Basiskörper mit zwei verschiedenen Aussendurchmessern vorzusehen, deren konische Aufnahmen unterschiedlich dimensioniert sind. Entsprechend müssen zwei Kopplungsteile mit den dazu passenden Schnittstellen, also entsprechend dimensionierten Auflage-Abschnitten bereitgestellt werden. Die Schnittstelle zwischen Kopplungsteil und Aufbauteil, wobei es in der Regel verschiedene Typen von Aufbauteilen gibt, kann hingegen unabhängig vom Aufbauteil immer gleich sein. Somit müssen nicht verschieden Aufbauteile mit verschiedenen Schnittstellen zu verschiedenen Grössen von Basiselementen gelagert und bereitgestellt werden, beziehungsweise die Anzahl der Kombinationsmöglichkeiten wird erhöht. Weiter ermöglichen es erfindungsgemässe Kopplungsteile, Basiskörper und Aufbauteile verschiedener Hersteller zu kombinieren, und so für die spezifischen Bedürfnisse eines Patienten das bestmögliche Implantat bereitzustellen.

Der Grundkörper eines erfindungsgemässen Kopplungsteils kann im Wesentlichen rotationssymmetrisch sein. Dies ist insbesondere bei einer abtragenden Fertigung vorteilhaft, da die Formgebung im Wesentlichen über Drehen erfolgen kann.

Ferner ist der Basiskörper des Dentalimplantat vorteilhaft im Wesentlichen rotationssymmetrisch, um diesen in den Kieferknochen einzuschrauben. Damit die Kräfte beim Kauen mit dem Dentalimplantat vom Aufbauteil möglichst gleichmässig über das Kopplungsteil in den Basiskörper abgeleitet werden, sind vorteilhaft auch das Kopplungsteil und das Aufbauteil rotationssymmetrisch ausgestaltet. Weiter kann eine rotationssymmetrische Schnittstelle bei den verschiedenen Aufbauteilen und Basiskörper einfach und kostengünstig hergestellt werden.

Vorteilhaft ist bei einem erfindungsgemässen Kopplungsteil das mindestens eine Rastelement als elastisches Rastelement ausgestaltet.

Durch das Rastelement kann ein Kopplungsteil mit dem mindestens einem Gegenrastelement eines in dem Längsloch anordenbaren Verbindungsteil, eine rastende Wirkverbindung eingehen. Durch die Elastizität des Rastelements wird verhindert, dass das Rastelement beim Zusammenführen oder beim Trennen der Teile beschädigt wird oder abbricht. Zusätzlich kann durch die Elastizität eine gute Wirkverbindung zwischen den Teilen erreicht werden, wodurch diese nicht unbeabsichtigt getrennt werden.

Ein erfindungsgemässes Kopplungsteil kann zusätzlich mindestens ein weiteres Rastelement umfassen, welches geeignet ist, mit mindestens einem weiteren Gegenrastelement eines Aufbauteils eine rastende Wirkverbindung einzugehen. Dadurch können das Kopplungsteil und das Aufbauteil zusätzlich miteinander verbunden werden, beispielsweise bevor das Verbindungsteil in das Längsloch eingeführt wird.

Vorteilhaft ist dabei das mindestens eine weitere Rastelement als elastisches Rastelement ausgestaltet. Auch hier kann durch die Elastizität des mindestens einen weiteren Rastelements verhindert werden, dass das Rastelement beim Zusammenführen oder beim Trennen der Teile beschädigt wird oder abbricht. Zusätzlich kann durch die Elastizität eine gute Wirkverbindung zwischen den Teilen erreicht werden, wodurch diese nicht unbeabsichtigt getrennt werden.

Alternativ oder zusätzlich kann bei einem erfindungsgemässen Kopplungsteil an einem koronalen Längsende und/oder an einem apikalen Längsende des Grundkörpers mindestens ein Rastelement vorgesehen sein. Durch die Anordnung des Rastelementes an einem der Enden des Kopplungsteils kann beispielsweise der Grundkörper an dem Verbindungsteil anliegen, während die Rastelemente darüber hinausragen und durch die Verlängerung in axiale Richtung elastisch ausgestaltet werden können.

Vorteilhaft ist bei einem erfindungsgemässen Kopplungsteil das mindestens eine Rastelement als ein parallel zur Längsachse an den Grundkörper angeformter Schnapphaken ausgestaltet. Ein Schnapphaken kann einfach mit dem Gegenrastelement beispielsweise in Form einer Rastnut eine rastende Wirkverbindung eingehen. Die Ausrichtung parallel zur Längsachse gibt dem Rastelement zusätzliche Elastizität, insbesondere für eine Auslenkung des Rastelementes senkrecht zur Längsachse.

Ein solches Rastelement kann dann mit einem entsprechendes Gegenrastelement eines Verbindungsteils, beispielsweise einer entsprechenden Vertiefung, eine Schnappverbindung eingehen.

Besonders vorteilhaft weist bei einem solchen erfindungsgemässen Kopplungsteil der Schnapphaken einen parallel zur Längsachse ausgerichteten federelastischen Hebelarm auf.

Am Ende des Hebelarms ist bei einer solchen Ausführungsform noch vorteilhafter eine zur Längsachse ausgerichtete Rastnase angeordnet.

Der elastische Federarm wird bei der Verbindung von Rastelement und Gegenrastelement temporär radial ausgelenkt, bis die Rastnase in eine entsprechende Vertiefung des Gegenrastelements einschnappt.

Weiter ist bei einem erfindungsgemässen Kopplungsteil vorteilhaft an einem koronalen Längsende des Grundkörpers mindestens ein Führungselement vorgesehen, welches dazu geeignet ist, das Kopplungsteil gegenüber einem Aufbauteil eines Dentalimplantats zur Längsachse fluchtend auszurichten.

Dies stellt eine korrekte Ausrichtung von Aufbauteil und Kopplungsteil zueinander sicher.

In einer besonders vorteilhaften Ausführungsform wird bei einem solchen erfindungsgemässen Kopplungsteil das mindestens eine Führungselement durch eine an dem koronalen Längsende des Grundkörpers vorstehende und fluchtend zur Längsachse ausgerichtete zylindrische Auskragung ausgebildet.

Alternativ kann das mindestens eine Führungselement als eine an dem koronalen Längsende des Grundkörpers angeordnete und fluchtend zur Längsachse ausgerichtete kreisförmig umlaufende Vertiefung ausgebildet sein.

Durch die Führungselemente werden das Aufbauteil und das Kopplungsteil beim Verbinden zueinander ausgerichtet und beim Zusammenbau geführt, sodass diese nicht verkanten.

Diese vorgenannten Führungselemente können auch radiale Scherkräfte zwischen Aufbauteil und Kopplungsteil übertragen.

In einer vorteilhaften Ausführungsform ist am koronalen Längsende des Kopplungsteils im Bereich des Führungselementes ein Drehfreistich ausgebildet.

Der Drehfreistich kann an der Basis des Führungselemente angeordnet sein. Der Drehfreistich verhindert einen radialen oder rechtwinkligen Übergang auf Höhe der koronalen Dichtfläche am Übergang zu dem Führungselement. Dadurch wird eine gute bakteriendichte Abdichtung zwischen den beiden Bauteilen sichergestellt, da kein radialer Übergang zwischen Führungselement und koronaler Dichtfläche des Kopplungsteils das dichtende Aufliegen der apikalen Dichtfläche des Aufbauteils behindern kann. Durch das Vermeiden eines rechtwinkligen Übergangs wird zudem die Gefahr der Rissbildung vermindert. Durch den Drehfreistich kann ferner die koronale Dichtfläche beispielsweise mit einer Schleifscheibe vollständig bearbeitet werden.

Weiter kann sich bei einem vorteilhaften Kopplungsteil an einen in Form einer gerade-konischen Mantelfläche oder gekrümmt-konischen Mantelfläche ausgestalteten Auflage-Abschnitt des Grundkörpers ein Übergangsabschnitt anschliessen.

Vorteilhaft ist der Aussenradius des Kopplungsteils am koronalen Ende des Übergangsabschnitts identisch zum Aussenradius des daran anstossenden Aufbauteils des Dentalimplantats, so dass in diesem Übergangsbereich beim Dentalimplantat keine vorstehenden Kanten entstehen.

Ein solcher Übergangsabschnitt ist nicht in der konischen Aufnahme des Basiskörpers angeordnet, und muss entsprechend nicht konisch ausgestaltet sein. Besonders vorteilhaft ist dennoch der Neigungswinkel der Mantelfläche des Kopplungsteils am koronalen Ende des Übergangsabschnitts identisch zur daran anschliessenden Mantelfläche eines Aufbauteils, so dass bei identischen Aussenradien eine glatte Mantelfläche resultiert.

Vorteilhaft weisen die Oberfläche des Kopplungsteils und/oder die Oberfläche des Basiskörpers im Auflage-Abschnitt beziehungsweise in einem Kontaktbereich eine geometrische Stetigkeit G1 auf (tangentiale Stetigkeit).

Eine G1 Stetigkeit der Oberflächen im Auflage-Abschnitt bedeutet insbesondere, dass auf keiner der Oberflächen im Kontaktbereich Kanten (Stetigkeit G0) vorhanden sind, welche bei einer, auch kleinen, relativen Verschiebung der Bauteile zueinander in der gegenüber liegenden Oberfläche einhaken und Material abscheren können, beziehungsweise selbst besonders leicht abgeschert werden können.

Besonders vorteilhaft weisen die Oberfläche des Kopplungsteils und/oder die Oberfläche des Basiskörpers im Auflage-Abschnitt beziehungsweise im Kontaktbereich eine geometrische Stetigkeit G2 auf (Krümmungsstetigkeit).

Eine solche G2-Stetigkeit der Oberflächen im Auflage-Abschnitt hat den Vorteil, dass bei einer kleinen relativen Verschiebung der Bauteile zueinander der Anpressdruck näherungsweise konstant bleibt. Die gleichmässig wirkenden Kräfte führen zu einer verminderten asymmetrisch wirkenden mechanischen Kraftwirkung.

Vorteilhaft ist bei einem erfindungsgemässen Kopplungsteil an einem koronalen Längsende des Grundkörpers eine plane, ringförmige koronale Dichtfläche senkrecht zur Längsachse des Grundkörpers vorgesehen.

Eine solche Dichtfläche liegt in einer Normalebene der Längsachse. Ein Aufbauteil weist vorteilhaft an einem apikalen Längsende eine analoge Dichtfläche auf, so dass im zusammengebauten Zustand des Dentalimplantates die beiden genannten Dichtflächen bündig überlappen und so den Innenraum des Dentalimplantats gegenüber dem Aussenraum dichtend abschliessen.

Alternativ können die Dichtflächen auch als konische Mantelflächen ausgestaltet sein, was jedoch die Herstellung der Teile aufwendiger macht.

In einer weiteren vorteilhaften Ausführungsform eines erfindungsgemässen Kopplungsteils ist an einem koronalen Längsende und/oder an einem apikalen Längsende des Grundkörpers ein Rotationssicherungsabschnitt mit einer nicht-rotationssymmetrischen Aussenkontur vorgesehen.

Ein solches Rotationssicherungselement kann zum Beispiel als ein an den konischen Auflageabschnitt anschliessender Abschnitt der Grundkörpers ausgestaltet sein, welcher anstatt eines runden Querschnitts einen viereckigen oder sechseckigen Querschnitt aufweist. Zusammen mit einer gegenteilig geformten Aufnahme im Basiskörper beziehungsweise im Aufbauteil ergibt sich eine formschlüssige Sicherung der entsprechenden Bauteile gegen Rotation um die Längsachse. Dies ist insbesondere vorteilhaft, um ein Übereinandergleiten der aufeinander aufliegenden Flächen der Bauteile eines erfindungsgemässen Dentalimplantat beim Einschrauben eines Verbindungsteils zu vermeiden, so dass Abrieb und mechanische Beschädigungen der Oberflächen vermieden werden.

Das Rotationssicherungselement kann auch ohne Rotationssymmetrie um die Längsachse ausgestaltet werden. Dabei kann beispielsweise an einer Stelle eine Asymmetrie in der Aussenkontur vorgesehen sein, so dass sich das Aufbauteil und das Kopplungsteil nur in einer einzigen, korrekten Ausrichtung zueinander montieren lassen.

Ein erfindungsgemässes Kopplungsteil kann aus einem Metall, insbesondere Titan, aus einer Metalllegierung, aus einem Keramikmaterial, insbesondere Zirkonoxid, aus einem Polymermaterial, oder aus einem Kompositmaterial gefertigt sein.

Elastische und dennoch stabile Materialien sind vorteilhaft, falls das Rastelement elastisch verformbar ist. Es ist jedoch auch möglich, ein erfindungsgemässen Kopplungsteil aus zwei verschiedenen Materialien zu fertigen. So kann beispielswiese ein erstes Element, welches die elastischen Rastelemente trägt, aus Metall gefertigt sein, und mit einem zweiten, aus wenig elastischem Keramikmaterial gefertigten Teil zu einem Kopplungselement zusammengefügt werden.

Vorteilhaft ist ein erfindungsgemässes Kopplungsteil durch ein Pulverspritzgussverfahren hergestellt.

Generell können im Pulverspritzgussverfahren beispielsweise Keramik oder Metallteile hergestellt werden.

Ein im Pulverspritzgussverfahren hergestelltes Kopplungsteil hat den Vorteil, dass es auch nicht rotationssymmetrisch ausgestaltet sein kann, ohne dass die Fertigung aufwendiger wird, wie es bei subtraktiven Bearbeitungsverfahren der Fall wäre. Das Kopplungsteil kann in einem Arbeitsschritt durch Spritzgiessen geformt werden. Ein subtraktives Bearbeitungsverfahren, insbesondre zerspanendes Verfahren wie Fräsen, Drehen oder Bohren, welches die Struktur des Bauteils belastet entfällt. Durch das Spritzgussverfahren wird auch die Oberfläche des Bauteils gegenüber einem bearbeiteten Bauteil wesentlich besser strukturiert. Allenfalls kann auch bei im Spritzgussverfahren hergestellten Kopplungsteil zusätzlich eine Nachbearbeitung, beispielsweise durch Gleitschleifen oder Polieren erfolgen.

Die Herstellung mittels Pulverspritzguss lässt sich an einem Bauteil insbesondere an der Oberfläche des Bauteils erkennen. Die Bauteil-Oberfläche ist durch die glatten Oberflächen der Spritzgussformen definiert, und es fehlen die Spuren subtraktiver Bearbeitungsverfahren. Dadurch wird die Gefahr der Rissbildung oder der Ansiedlung von Bakterien reduziert.

Ein zweiter Aspekt der Erfindung betrifft eine Baugruppe für ein modulares Dentalimplantat.

Eine solche erfindungsgemässe Baugruppe umfasst ein Aufbauteil, ein Verbindungsteil zum formschlüssigen Verbinden des Aufbauteils mit einem zur Implantation im Knochengewebe eines Patienten vorgesehenen Basiskörper, und ein erfindungsgemässes Kopplungsteil wie obenstehend erläutert. Das Aufbauteil, das Verbindungsteil und das Kopplungsteil sind entlang einer gemeinsamen Längsachse fluchtend angeordnet. Das Verbindungsteil ist in einem Längsloch des Kopplungsteils und einem Längsloch des Aufbauteils anordenbar. Das Kopplungsteil, das Verbindungsteil und das Aufbauteil sind formschlüssig miteinander verbindbar oder verbunden sind.

Das Aufbauteil kann beispielsweise eine Suprastruktur, eine Zahnkrone, eine Gebissprothese, ein Locator, ein Abutment oder auch eine Healing-Komponente umfassen.

Die zumindest temporäre formschlüssige Verbindung des Aufbauteils, des Verbindungsteils und des erfindungsgemässen Kopplungsteils in einer erfindungsgemässen Baugruppe hat den Vorteil, dass die Baugruppe bei der Montage des Dentalimplantats, als ein integriertes Teil gehandhabt werden kann. Die Baugruppe beziehungsweise das Verbindungsteil der Baugruppe kann so beispielsweise beim Zusammenbau des Dentalimplantats einfach im Mund des Patienten in der Bohrung des bereits im Kieferknochen implantierten Basiskörpers platziert werden, um anschliessend das Verbindungselement mit dem Basiskörper formschlüssig zu verbinden und gegenüber diesem zu verspannen, wodurch schlussendlich alle Bauteile formschlüssig und zu einem stabilen, fertigen Dentalimplantat verbunden sind.

Die vorteilhafte formschlüssige Wirkverbindung der drei Bauteile wird dadurch erreicht, dass das mindestens eine Rastelement eines erfindungsgemässen Kopplungsteils mit mindestens einem entsprechenden Gegenrastelementen des im Längsloch des Kopplungsteils angeordneten Verbindungsteils eine Rastverbindung erstellt. Das Aufbauteil wiederum wird zwischen Kopplungsteil und Verbindungsteil formschlüssig fixiert.

Für die Erstellung der Wirkverbindung sind keine Werkzeuge notwendig. Es reicht, die Bauteile in einer bestimmten Art aufeinander zu stecken. Da die Wirkverbindung nur die drei Bauelemente während der Montage zusammenhalten und keine relevanten Kräfte aufnehmen muss, ist die Rastverbindung mechanisch ausreichend stabil. Je nach Ausgestaltung der Wirkverbindung kann die Rastverbindung auch wieder ohne Hilfsmittel gelöst werden.

Das Aufbauteil kann bereits mit einer Suprastruktur verbunden sein, oder kann mit der Suprastruktur ein einteiliges Element bilden.

Vorteilhaft ist bei einer solchen erfindungsgemässen Baugruppe das Kopplungsteil über eine Schnappverbindung oder eine rastende Wirkverbindung umfassend mindestens ein Rastelement und ein Gegenrastelement mit dem Verbindungsteil formschlüssig verbindbar oder verbunden.

Es sind verschiedene Typen von Schnappverbindungen beziehungsweise rastenden Wirkverbindungen bekannt. Für die kleinen Baugrössen von Dentalimplantaten sind Schnappverbindungen mit elastisch verformbaren Hebelarmen vorteilhaft, da sie konstruktiv einfach an den Teilen angebracht werden können. Zusätzlich kann eine Schnappverbindung durch axiales Verschieben des Verbinders gegenüber dem Kopplungsteil einfach in Wirkverbindung gebracht werden, ohne dass wie beispielsweise bei einem Gewinde oder Bajonettverschluss eine Drehung in Umfangsrichtung erforderlich ist. Eine Schnappverbindung ist für derartige Verbindungen ausreichend, da in der Vormontage zwischen den Bauteilen nur geringe Kräfte wirken.

In einer vorteilhaften Variante einer solchen erfindungsgemässen Baugruppe ist das Kopplungsteil über eine weitere Schnappverbindung umfassend mindestens ein weiteres Rastelement und ein weiteres Gegenrastelement mit dem Aufbauteil formschlüssig verbindbar oder verbunden.

Eine solche Ausführungsform hat den Vorteil, dass beim Zusammenbau der erfindungsgemässen Baugruppe das Kopplungsteil bereits mit dem Aufbauteil verbunden werden kann, bevor das Verbindungsteil an das Kopplungsteil montiert wird. Weiter ist es auch möglich, Kopplungsteil und Aufbauteil bereits derart vormontiert zur Verfügung zu stellen.

Vorteilhaft weist das Verbindungsteil einer erfindungsgemässen Baugruppe mindestens ein Gegenrastelement auf, welches mit mindestens einem Rastelement des Kopplungsteils in Wirkverbindung steht oder bringbar ist. Durch die Verbindung des mindestens einen Rastelementes des Kopplungsteils mit dem mindestens einen Gegenrastelement am Verbindungsteil kann eine rastende Wirkverbindung zwischen den Teilen erzeugt werden.

Besonders vorteilhaft ist bei einer solchen Baugruppe das mindestens eine Gegenrastelement des Verbindungsteils als radiale Vertiefung in einer Mantelfläche des Verbindungsteils ausgestaltet.

Das mindestens eine Gegenrastelement des Verbindungsteils der erfindungsgemässen Baugruppe kann als umlaufende Rastnut ausgestaltet sein.

Durch eine radiale Vertiefung oder eine Rastnut kann das mindestens eine Rastelement des Kopplungsteils an dem Verbindungsteil einrasten und erzeugt eine Wirkverbindung zwischen Kopplungsteil und Verbindungsteil. Wenn das Verbindungsteil beispielsweise ein Gewinde zum Verbinden des Verbindungsteils mit dem Basiskörper umfasst, kann das Verbindungsteil um die eigene Längsachse gedreht werden ohne dass die Wirkverbindung zwischen dem Rastelement und dem Verbindungsteil gelöst oder unterbrochen wird.

In einer weitere vorteilhaften Ausführungsform einer erfindungsgemässen Baugruppe weist das Aufbauteil mindestens ein weiteres Gegenrastelement auf, welches mit mindestens einem weiteren Rastelement des Kopplungsteils in Wirkverbindung steht.

Vorteilhaft ist dabei das mindestens eine weitere Gegenrastelement des Aufbauteils einer erfindungsgemässen Baugruppe als radiale Vertiefung im Bereich eines apikalen Längsende des Aufbauteils ausgestaltet.

Besonders vorteilhaft ist bei einer erfindungsgemässen Baugruppe das mindestens eine weitere Gegenrastelement des Aufbauteils als umlaufende Rastnut ausgestaltet.

Bei einem erfindungsgemässen Kopplungsteil kann das Verbindungsteil und/oder das Aufbauteil aus einem Metall, insbesondere Titan, aus einer Metalllegierung, aus einem Keramikmaterial, insbesondere Zirkonoxid, aus einem Polymermaterial, oder aus einem Kompositmaterial gefertigt sein.

Die Bauteile, insbesondere die aus Keramik gefertigten Teile, können in einem Pulverspritzgussverfahren hergestellt werden. Es ist aber auch möglich metallische Teile, beispielsweise Titan oder Titanlegierungen, im Spritzgussverfahren herzustellen. Die Bauteile können durch Pulverspritzgiessen gegenüber einem spanabhebendem Bearbeitungsverfahren kostengünstiger hergestellt werden. Weiter sind auch beispielsweise nichtrotationssymmetrische Formen einfacher herstellbar, welche ansonsten beispielsweise als Frästeile in der Produktion aufwendig sind.

Ein dritter Aspekt der Erfindung betrifft ein modulares Dentalimplantat.

Ein solches erfindungsgemässes Dentalimplantat umfasst einen Basiskörper zur Implantierung in einem Knochengewebe eines Patienten sowie eine erfindungsgemässe Baugruppe wie obenstehend erläutert.

Der Basiskörpers eines erfindungsgemässen modularen Dentalimplantats ist zum Zeitpunkt der Montage des Dentalimplantats bereits im Knochengewebe des Patienten implantiert. Direkt nach der Implantation des Basiskörpers wird in der Regel als Aufbauteil ein Einheilelement bzw. ein Gingivaformer verwendet. Nach erfolgter Einheilung des Basiskörpers wird für einen provisorischen oder definitiven Zahnersatzaufbau das Aufbauteil wieder demontiert und neu erstellt. Dazu wird ein anderes Aufbauteil eingebaut, das Aufbauteil kann beispielsweise ein Abutment und/oder eine Suprastruktur wie beispielswiese eine Zahnkrone oder eine Gebissprothese umfassen.

Vorteilhaft sind bei einem erfindungsgemässen Dentalimplantat der Basiskörper, das Aufbauteil, das Verbindungsteil und das Kopplungsteil entlang einer Längsachse des Dentalimplantats fluchtend angeordnet und durch das Verbindungsteil formschlüssig miteinander verbindbar oder verbunden.

Bei einem erfindungsgemässen Dentalimplantat kann der Basiskörper aus einem Metall, insbesondere Titan, aus einer Metalllegierung, oder aus einem Keramikmaterial, insbesondere Zirkonoxid, gefertigt sein. Der Basiskörper kann insbesondere im Pulverspritzgussverfahren hergestellt werden. Die Vorteile des Pulverspritzgussverfahren wurden bereits zuvor erwähnt.

Ein vierter Aspekt der Erfindung betrifft ein Kit für den Aufbau einer Baugruppe.

Ein solches erfindungsgemässes Baugruppen-Kit umfasst mindestens ein Aufbauteil, mindestens ein Verbindungsteil sowie mindestens ein erfindungsgemässes Kopplungsteil, so wie sie in einer erfindungsgemässen Baugruppe wie obenstehend definiert sind.

Ein solches Kit erlaubt das flexible Zusammenstellen und Montieren einer erfindungsgemässen Baugruppe zum nachfolgend einfachen Zusammenbau mit einem Basiskörper zu einem fertigen erfindungsgemässen Dentalimplantat.

Das Aufbauteil kann beispielsweises eine Suprastruktur, eine Zahnkrone, eine Gebissprothese, ein Locator, ein Abutment oder eine Healing-Komponente wie beispielsweise einen Gingivaformer umfassen.

Ein fünfter Aspekt der Erfindung betrifft ein Kit für den Aufbau eines modularen Dentalimplantats.

Ein solches erfindungsgemässes Dentalimplantat-Kit umfasst mindestens einen Basiskörper, mindestens ein Aufbauteil, mindestens ein Verbindungsteil sowie mindestens ein erfindungsgemässes Kopplungsteil, so wie sie in einem erfindungsgemässen Dentalimplantat wie obenstehend definiert sind.

Das Aufbauteil kann beispielsweises eine Suprastruktur, eine Zahnkrone, eine Gebissprothese, ein Locator, ein Abutment oder eine Healing-Komponente wie beispielsweise einen Gingivaformer umfassen.

Weitere Aspekte der vorliegenden Erfindung ergeben sich auch aus der nachfolgenden Beschreibung.

### Kurze Beschreibung der Zeichnungen

Zum besseren Verständnis der vorliegenden Erfindung wird nachfolgend auf die Figuren Bezug genommen. Diese zeigen lediglich Ausführungsbeispiele des Erfindungsgegenstands. Für gleiche oder gleich wirkende Teile werden in den Figuren und der dazugehörigen Beschreibung gleiche oder ähnliche Bezugszeichen verwendet.
- Figur 1: zeigt schematisch (a) eine mögliche Ausführungsform eines erfindungsgemässen Kopplungsteils, und (b) das gleiche Kopplungsteil als Teil eines erfindungsgemässen Dentalimplantats.
- Figur 2: zeigt schematisch (a) eine andere mögliche Ausführungsform eines erfindungsgemässen Kopplungsteils, und (b) das gleiche Kopplungsteil als Teil eines erfindungsgemässen Dentalimplantats.
- Figur 3: zeigt schematisch im Längsschnitt noch eine Ausführungsform eines erfindungsgemässen Kopplungsteils als Teil einer erfindungsgemässen Baugruppe.
- Figur 4: zeigt eine weitere mögliche Ausführungsform eines erfindungsgemässen Kopplungsteils als Teil eines Dentalimplantats, mit einem Auflage-Abschnitt des Kopplungsteils in Form eines invertierten Kegels.
- Figur 5: zeigt ein weiteres Ausführungsbeispiel eines erfindungsgemässen Kopplungsteils als Teil eines Dentalimplantates, mit einer planen Fläche als Auflage-Abschnitt des Kopplungsteils.
- Figur 6: zeigt schematisch (a) eine lösbare Schnappverbindung, (b) eine bedingt lösbare Schnappverbindung, (c) eine unlösbare Bajonett-Verbindung und (d) eine unlösbare Schnappverbindung zwischen einem Verbindungsteil und einem erfindungsgemässen Kopplungsteil.
- Figur 7: zeigt schematisch eine weitere Ausführungsform eines erfindungsgemässen Kopplungsteils als Teil eines erfindungsgemässen Dentalimplantats, (a) in Seitenansicht, (b) in einem Längsschnitt durch die Ebene A-A, (c) in perspektivischer Ansicht, und (d) als Explosionszeichnung.
- Figur 8: zeigt schematisch das Verbindungsteil aus Figur 7, (a) in Seitenansicht, (b) in Aufsicht, (c) in einem Längsschnitt durch die Ebene A-A, und (d) in einer Detailansicht des Bereichs D.
- Figur 9: zeigt schematisch das Aufbauteil aus Figur 7, (a) in Seitenansicht und (b) in einem Längsschnitt durch die Ebene A-A.
- Figur 10: zeigt schematisch noch eine andere mögliche Ausführungsform eines erfindungsgemässen Kopplungsteils, verbaut in einer erfindungsgemässen Baugruppe, (a) als Explosionszeichnung, und (b) im Längsschnitt.
- Figur 11: zeigt schematisch das erfindungsgemässe Kopplungsteil aus Figur 10, (a) in perspektivischer Ansicht, (b) in Aufsicht, (c) in einem Längsschnitt entlang A-A, (d) in einer Detailansicht des Bereichs C, (e) in einem Längsschnitt entlang B-B, und (f) in einer Detailansicht des Bereichs D.
- Figur 12: zeigt schematisch zwei weitere Ausführungsformen einer Baugruppe für ein erfindungsgemässes Dentalimplantats, (a) mit einer einteiligen Einheit aus Aufbauteil und Krone, und (b) mit einer einteiligen Einheit aus Aufbauteil und Gingivaformer.

### Wege zur Ausführung der Erfindung

In der nachfolgenden Diskussion der Figuren ist bei einer Erwähnung eines Aufbauteils 4 jeweils alternativ auch eine entsprechend Suprastruktur 6 mitgemeint, soweit die beiden Varianten nicht explizit unterschieden werden.

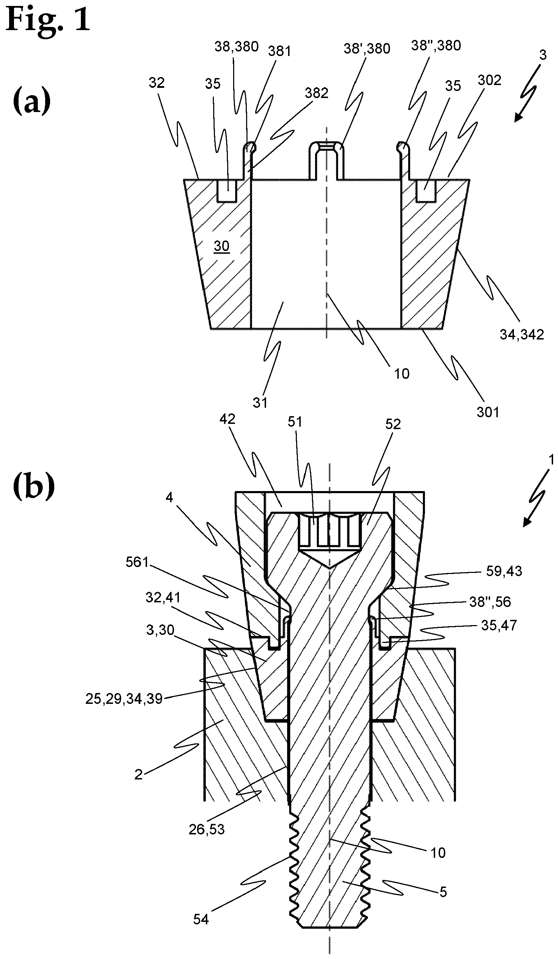

Eine vorteilhafte Ausführungsform eines erfindungsgemässen Kopplungsteils 3, sowohl allein als auch verbaut in ein erfindungsgemässes Dentalimplantat 1, ist in Figur 1 dargestellt.

Das Kopplungsteil 3 umfasst einen Grundkörper 30 in Form eines geraden Kegelstumpfs, dessen transversaler Durchmesser von einem koronalen Längsende 302 des Grundkörpers 30 zu einem apikalen Längsende 301 hin kleiner wird. Ein Längsloch 31 verläuft entlang einer Längsachse 10 durch den Grundkörper 30. Der Grundkörper 30 ist im Wesentlichen rotationssymmetrisch.

Eine Auflage-Abschnitt 34 des Kopplungsteils 3 ist gegeben durch die Mantelfläche 342 des beispielsweise geraden Kegelstumpfs des Grundkörpers 30. Der Auflageabschnitt 34 ist dazu vorgesehen, im zusammengebauten Dentalimplantat 1 auf der Mantelfläche einer entsprechend geformten konischen Aufnahme 25 eines Basiskörpers 2 bündig aufzuliegen, um so an dieser Kontaktstelle 29, 39 der beiden Teile den Innenraum des Dentalimplantats 1 dichtend abzuschliessen.

An dem koronalen Längsende 302 des Grundkörpers 30 ist senkrecht zur Längsachse 10 eine koronale Dichtfläche 32 in Form der ringförmigen, planen Stirnfläche ausgebildet. Diese koronale Dichtfläche 32 ist dazu vorgesehen, im zusammengebauten Dentalimplantat 1 bündig an einer entsprechenden planen, apikalen Dichtfläche 41 eines Aufbauteils 4 (beziehungsweise eben einer Suprastruktur 6) anzuliegen, um so an dieser Kontaktstelle der beiden Bauteile den Innenraum des Dentalimplantats 1 dichtend abzuschliessen.

An dem koronalen Ende 302 des Kopplungsteils 30 sind um die Öffnung des Längslochs 31 herum vier Rastelemente angeordnet, welche parallel zur Längsachse 10 aus den Grundkörper 30 herausragen. Von den vier Rastelementen sind drei Rastelemente 38, 38', 38" sichtbar. Die Rastelemente sind als Schnapphaken 380 ausgestaltet, die einen federelastischen Hebelarm 382 und eine radial zur Innenseite hin gerichteten Rastnase 381 umfassen.

Auf der Stirnseite am koronalen Längsende 302 des Kopplungsteils 3 ist ein Führungselement 35 in Form einer zur Längsachse 10 gefluchteten ringförmigen Vertiefung ausgebildet. Dieses Führungselement 35 dient unter anderem dazu, durch eine formschlüssige Wirkverbindung mit einem entsprechenden Führungselement 47 eines Aufbauteils 4 das Aufbauteil fluchtend zur Längsachse 10 auszurichten und so den korrekten Zusammenbau einer erfindungsgemässen Baugruppe oder eines erfindungsgemässen Dentalimplantats zu erleichtern. Weiter werden im Dentalimplantat 1 durch diese formschlüssige Verbindung 35, 47 das Kopplungsteil 3 und das Aufbauteil 4 in radialer Richtung gegeneinander abgestützt. Radiale Scherkräfte, die bei der späteren Benutzung des Dentalimplantats auftreten, können primär so direkt vom Aufbauteil auf das Kopplungsteil übertragen werden, so dass das Verbindungsteil 5 nur geringen radialen Scherkräften ausgesetzt wird.

Für die Montage eines erfindungsgemässen Dentalimplantats 1 wird in einem ersten Schritt eine erfindungsgemässe Baugruppe 11 bestehend aus einem Kopplungsteil 3, einem Aufbauteil 4 und einem Verbindungsteil5 erstellt. In einem zweiten Schritt wird die Baugruppe mit einem bereits im Kieferknochen des Patienten verankerten Basiskörper 2 zum Dentalimplantat 1 verbunden. Die Baugruppe kann so ausserhalb des Mundraums aufgebaut und anschliessend als ein einziges Bauelement in dem Mundraum eingebracht werden, was die Handhabung stark vereinfacht. Die Baugruppe selbst kann direkt vor dem Einbau vor Ort aufgebaut werden. Die Baugruppe kann aber auch bereits im montierten Zustand bereitgestellt werden.

Zum Aufbau der erfindungsgemässen Baugruppe wird das Aufbauteil 4 auf dem bereitgestellten Kopplungsteil 3 aufgesetzt, so dass eine apikale Dichtfläche 41 des Aufbauteils 4 auf der koronalen Dichtfläche 32 des Kopplungsteils 3 aufliegt. Ein am apikalen Ende ringförmig vorstehendes Führungselement 47 des Aufbauteils 4 wird dabei in ein als ringförmige Nut ausgestaltetes Führungselement 35 am koronalen Längsende 302 des Kopplungsteils 3 eingeführt. Die beiden Führungselemente 32, 47 stehen radial bündig in Kontakt, so dass eine korrekte Ausrichtung der beiden Bauteile 3, 4 gefluchtet zur Längsachse 10 sichergestellt ist. Zwischen der apikalen Stirnfläche des Führungselements 47 und dem Grund der Nut 35 ist vorteilhaft ein verbleibender Spalt vorgesehen, um den axialen Anpressdruck ausschliesslich auf den Dichtflächen 32, 41 zu haben.

Anschliessend wird das Verbindungsteil 5 beispielsweise in Form einer zylindrischen Schraube von einem dem Aufbauteil 3 abgewandten Ende eines Längslochs 42 des Aufbauteils 4 her fluchtend zur Längsachse durch das Längsloch 42 des Aufbauteils 4 und das daran anschliessende Längsloch 31 des Kopplungsteils 3 hindurchgeführt. Die elastischen Rastelemente 38, 38', 38", 38'" sind, angepasst auf die Dimensionen das Verbindungsteils 5, so auf dem Kopplungsteil 3 angeordnet, dass sie beim Passieren des Verbindungsteils 5 durch den zylindrischen Stützabschnitt 53 des Verbindungsteils 5 radial nach aussen ausgelenkt werden. Schliesslich erreichen die Rastelemente 38, 38', 38", 38‴ ein Gegenrastelement 56 des Verbindungsteils 5, welches beispielsweise in Form einer umlaufenden radialen Rastnut 561 unterhalb des Kopfstücks 52 des Verbindungsteils 5 angeordnet ist. Die durch die ausgelenkten Schnapphaken 380 federkraftbeaufschlagten Rastnasen 381 bewegen sich nach innen in die umlaufende radiale Rastnut 561, so dass sich eine formschlüssige Verbindung zwischen Kopplungsteil 3 und Verbindungsteil 5 ergibt. Das Verbindungsteil 5 weist ein Kopfstück 52 auf, dessen Aussendurchmesser grösser ist als mindestens Teile des Innendurchmessers des Längsloch 42 des Aufbauteils 4. Da das Aufbauteil 4 dadurch zwischen dem Kopplungsteil 3 und dem Kopfstück 52 des Verbindungsteils 5 formschlüssig fixiert ist, sind somit das Kopplungsteil 3, das Aufbauteil 4 und das Verbindungsteil 5 formschlüssig miteinander verbunden.

Vorteilhaft sind die Rastelemente 38, 38', 38", 38'" derart ausgestaltet, dass die Rastnasen 381 in die Kerben des Gewindes des apikalen Gewindeabschnittes des schraubenförmigen Verbindungsteils 5 eingreifen. So kann zum Durchführen des Gewindeabschnitts das Gewinde eingedreht werden, ohne dass die Rastnasen über das Gewinde rutschen müssen. Dies vermeidet unerwünschten Abrieb und mögliche Beschädigungen der Bauteile.

Alternativ kann auch der Aussendurchmesser des Gewindeabschnitts des Verbindungsteils 5 so gewählt werden, dass er maximal gleich gross wie der durch die Rastnasen 381 definierte freie Innendurchmesser der Rastelemente 38, 38', 38", 38‴, und vorteilhaft kleiner ist. Beim Passieren des apikalen Gewindeabschnitts werden dann die Rastelemente 38, 38', 38", 38‴ nicht oder nur geringfügig ausgelenkt.

Die genannte formschlüssige Verbindung der drei Bauteile 3, 4, 5 der Baugruppe 11 muss noch keine externen Kräfte aufnehmen. Es ist deshalb noch keine Kraftbeaufschlagung in Längsrichtung notwendig. Gegebenenfalls kann oder muss sogar ein leichtes Spiel zwischen den einzelnen Bauteilen 3, 4, 5 verbleiben. Zur präziseren Handhabbarkeit einer erfindungsgemässen Baugruppe 11 sind jedoch vorzugsweise die räumlichen Positionen der einzelnen Bauteile der Baugruppe zueinander möglichst fixiert.

Die Ausgestaltung des Gegenrastelements 56 als umlaufende Rastnut 561 hat den Vorteil, dass die rotatorische Ausrichtung des Verbindungsteils 5 zum Kopplungsteil 3 nicht relevant ist. Dies erleichtert wiederum die Handhabbarkeit. Weiter erlaubt es die freie Drehung des Verbindungsteils 5 gegenüber dem Kopplungsteil 3 um die Längsachse 10, was beim späteren Einschrauben des Verbindungsteils 5 in den Basiskörper 2 vorteilhaft ist, da das Aufbauteil 4 dabei nicht mitdrehen muss.

Die vormontierte Baugruppe 11 bestehend aus Kopplungsteil 3, Aufbauteil 4, Verbindungsteil 5 kann nun mit dem bereits im Knochengewebe des Patienten angebrachten Basiskörper 2 (von dem in der Figur nur der obere, koronale Teil gezeigt ist) zum fertigen Dentalimplantat 1 zusammengebaut werden. Dazu wird das apikale Ende des schraubenförmigen Verbindungsteils 5 so weit in die koronale Öffnung des Sacklochs des Basiskörpers 2 eingeführt, dass der Gewindeabschnitt des Verbindungsteils 5 das Innengewinde in der Bohrung erreicht. Anschliessend kann durch ein geeignetes Werkzeug, welches in ein Eingriffsmittel 51 im Kopfstück 52 des Verbindungsteils 5 eingreift, das Aussengewinde des schraubenförmigen Verbindungsteils 5 in das Innengewinde der Bohrung des Basiskörpers 2 eingedreht werden.

Wenn beim Eindrehen der Verbindungsschraube 5 der kegelstumpfförmige Auflage-Abschnitt 34 des Kopplungsteils 3 die konische Aufnahme 25 des Basiskörpers 2 erreicht, muss das Verbindungsteil 5 trotz dem nun fixierten Kopplungsteil 3 weiter eingedreht werden, bis das vorgesehene Anzugsdrehmoment erreicht ist. Dazu muss sich das Verbindungsteil 5 gegenüber dem Kopplungsteil 3 in Längsrichtung noch eine bestimmte Distanz verschieben können. Dies kann erreicht werden durch eine entsprechend breite umlaufende Rastnut 561 des Gegenrastelements 56, welche es bei gleichzeitiger rotatorischer Entkopplung erlaubt, das Gewinde des Verbindungsteils 5 noch weiter einzuschrauben. Die Rastnut 561 sollte dabei vorteilhaft so breit sein, dass sie die Rastnasen 301 aufnehmen kann und diese in der Rastnut 561 in Längsrichtung noch genügend Restweg haben, dass eine Verbindungs-Schraube als Verbindungsteil 5 fertig eingedreht werden kann. Alternativ kann eine erneute radiale Auslenkung der Rastelemente nach Erreichen der koronalen Kante der Rastnut 561 erfolgen.

Ein konischer Auflageabschnitt des Kopfstücks 52 des Verbindungsteils 5 liegt in der Schlussposition auf einer entsprechenden konischen Stützfläche 43 im Längsloch 42 des Aufbauteils 4 auf, die apikale Dichtfläche 41 des Aufbauteils 4 auf der koronalen Dichtfläche 32 des Kopplungsteils 3, und der im gezeigten Beispiel konische Auflageabschnitt 34 des Kopplungsteils 3 auf der Mantelfläche der konischen Aufnahme 25 des Basiskörpers 2. Durch die auf das Verbindungsteil 5 ausgeübte Zugkraft entlang der Längsachse 10 zwischen dem Kopfstück 52 des Verbindungsteils 5 und dem Innengewinde (nicht dargestellt) des Basiskörpers 2 sind Aufbauteil 4, Kopplungsteil 3 und Basiskörper 2 gegeneinander verspannt. Durch das erfolgte Verpressen des im gezeigten Beispiel konischen Grundkörpers 30 in die konische Aufnahme 25 des Basiskörpers 2 ist das Kopplungsteil 3 gegenüber dem Basiskörper radial stabil abgestützt. Durch die aufeinander abgestimmte Form der Kontaktflächen der aneinander anliegenden Bauteile und die Zugkraftbeaufschlagung ist der Innenraum des Dentalimplantats 1 dicht gegenüber dem Aussenraum abgeschlossen.

Die Entfernung der Baugruppe 11 erfolgt in umgekehrter Reigenfolge der obengenannten Bauschritte. Gegebenenfalls sind die dabei zu überwindenden Haftkräfte zwischen den verschiedenen Bauteilen grösser als die Auslenkungskraft der Rastelemente 38, 38', 38", 38‴, so dass das Verbindungsteil 5 zuerst aus dem Dentalimplantat 1 entfernt werden kann, bevor die restlichen Bauteile 3, 4 separat manuell entfernt werden.

Alternativ kann beim Aufbau eines erfindungsgemässen Dentalimplantats 1 auf die vorgängige Erstellung einer Baugruppe 11 (3, 4, 5) verzichtet werden. In einem solchen Fall wird zuerst das Kopplungsteil 3 in die entsprechende Aufnahme 25 des Basiskörpers 2 eingesetzt. In einem zweiten Schritt wird das Aufbauteil 4 auf dem Kopplungsteil 3 aufgesetzt. In einem dritten Schritt wird das Verbindungsteil 5 durch die entsprechenden durchgehenden Bohrungen 42, 31 des Aufbauteils 4 und des Kopplungsteils 3 geführt und mit dem Basiskörper in Wirkverbindung gebracht.

Anstelle eines separaten Gegenrastelements 56 kann bei einem schraubenförmigen Verbindungsteil 5 auch das Gewinde des Verbindungsteils direkt als Gegenrastelement 56 dienen. In einem solchen Fall wird beim Aufbau der Baugruppe 11 das apikale Gewinde des Verbindungsteils 5 auf die Rastnasen 381 der Rastelemente gedreht, welche dabei als Gegengewinde dienen. Beim Festziehen des Verbindungsteils 5 am Schluss des Montagevorgangs, bei welchem das Kopplungsteil 3 gegenüber dem Basiskörper 2 bereits fixiert ist, werden dann die Schnapphaken 380 durch die Flanken der Gewindekerben geringfügig ausgelenkt.

Bei einer solchen Ausführungsform einer Baugruppe ist es auch möglich, das Kopplungsteil 3 an jeder beliebigen Position entlang des Gewindeabschnitts des Verbindungsteils 5 zu platzieren.

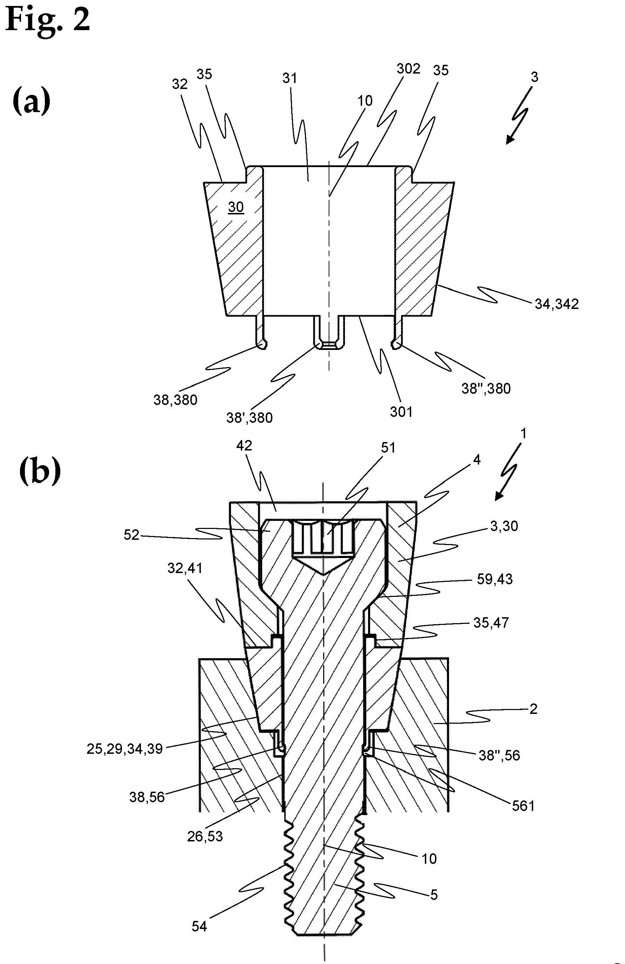

Eine weitere vorteilhafte Ausführungsform eines erfindungsgemässen Kopplungsteils 3 ist in Figur 2 dargestellt, sowohl allein als auch verbaut in ein erfindungsgemässes Dentalimplantat 1.

Der Grundkörper 30 des dargestellten erfindungsgemässen Kopplungsteil 3 ist wiederum als gerader Kegelstumpf mit einem entsprechen konischen Auflage-Abschnitt 34 ausgestaltet; und ein Längsloch 31 verläuft einer Längsachse 10 durch den Grundkörper 30. Vier Rastelemente, von welchen drei Rastelemente 38, 38', 38" sichtbar sind, sind an apikalen Längsende 301 des Kopplungsteils 3 um die Öffnung des Längslochs 31 herum angeordnet und stehen parallel zur Längsachse 10 an dem und aus dem Grundkörper 30 vor.

Auf der koronalen Dichtfläche 32 des Kopplungsteils 3 steht ein ringförmiger Kragen vor, der als Führungselement 35 dient. Im zusammengebauten Zustand des Dentalimplantats 1 stützt sich die äussere Mantelfläche des Führungselements 35 auf einem Führungselement 47, welches als zylindrischer Abschnitt auf der Innenseite des Längslochs 42 des Aufbauteils 4 ausgebildet ist, ab, so dass radiale Scherkräfte zwischen den beiden Bauteilen 3, 4 direkt übertragen werden.

Der Aufbau und die Funktion der verschiedenen Elemente des dargestellten Dentalimplantats 1 sind analog zu der in der Figur 1 gezeigten Ausführungsform. Der Zusammenbau der Baugruppe 11 (3, 4, 5) und deren Einbau im Basiskörper 2 erfolgt ebenfalls analog.

Das Gegenrastelement 56 des Verbindungsteils 5 muss aufgrund der Position der Rastelemente 38, 38', 38", 38‴ des Kopplungsteils 3 weiter vom Kopfstück 52 entfernt angeordnet sein, und liegt im zusammengebauten Dentalimplantat 1 innerhalb des Basiskörpers 2. Vom Basiskörper ist wiederum nur das koronale Längsende gezeigt.

Aufgrund der Ausrichtung der Rastelemente eignet sich die gezeigte Ausführungsform eines Kopplungsteils 3 besonders gut dazu, den Gewindeabschnitt des Verbindungsteils 5 in die Rastnasen einzudrehen, da ein Verkanten nicht möglich ist. Ebenso kann auch hier das Gewinde direkt als Gegenrastelement verwendet werden.

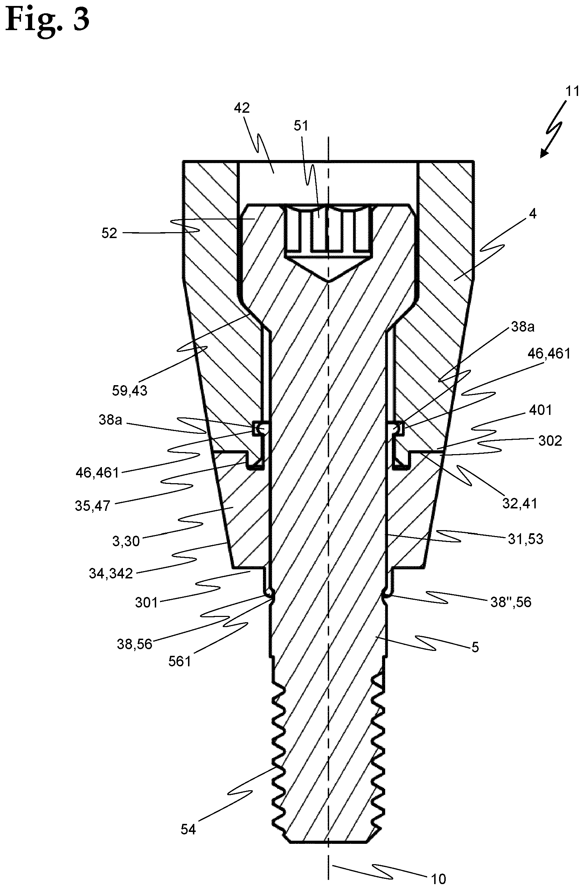

Eine weitere Ausführungsform eines erfindungsgemässen Kopplungsteils 3 ist in Figur 3 als Teil einer erfindungsgemässen Baugruppe 11 dargestellt.

Der Grundkörper 30 des Kopplungsteils 3 ist als gerader Kegelstumpf ausgestaltet, mit konischem Auflage-Abschnitt 34. Ein Längsloch 31 verläuft entlang der Längsachse 10 durch den Grundkörper 30. Eine Gruppe von Rastelementen 38 steht an dem apikalen Längsende 301 parallel zur Längsachse 10 aus dem Grundkörper 30 vor, analog zum Kopplungsteil aus Figur 2, und sind in einem Gegenrastelement 56 in Form einer umlaufenden Rastnut 561 am Schaft des Verbindungsteils 5 eingerastet.

Am koronalen Längsende 302 des Kopplungsteils 3 ist zentriert zur ringförmigen koronalen Dichtfläche 32 und der Längsachse 10 eine ringförmige Vertiefung angeordnet, welche als Führungselement 35 dient. Ein Führungselement 47 des Aufbauteils 4 in Form einer ringförmigen Auskragung ragt an einem apikalen Ende 401 des Aufbauteils 4 aus der apikalen Dichtfläche 41. Die radiale Mantelfläche der Auskragung 47 liegt bündig an der radialen Innenwand der Vertiefung 35 an. Die beiden Bauteile 3, 4 sind entsprechend gefluchtet zur gemeinsamen Längsachse 10 ausgerichtet. Im zusammengebauten Dentalimplantat werden zudem radiale Scherkräfte direkt zwischen den Bauteilen übertragen.

In der Vertiefung 35 des Kopplungsteils 3 ist um die koronale Öffnung des Längslochs 31 herum eine Gruppe von weiteren Rastelemente 38a angeordnet, welche parallel zur Längsachse 10 aus dem Boden der Vertiefung herausragen. Die weiteren Rastelemente 38a umfassen jeweils einen Schnapphaken mit einem federelastischen Hebelarm und einer radial nach aussen gerichteten Rastnase am Ende des Hebelarms. Die weiteren Rastelemente 38a stehen mit entsprechenden weiteren Gegenrastelementen 46 in Wirkverbindung.

Die weiteren Gegenrastelemente 46 sind dabei als gemeinsame umlaufende hinterschnittene Rastnut 461 im Längsloch 42 des Aufbauteils 4 realisiert, in welche die Rastnasen der weiteren Rastelemente 38a eingerastet sind. Durch die weiteren Rastelemente 38a und Gegenrastelemente 46 in Verbindung mit den Führungselementen 35, 47 sind Kopplungsteil 3 und Aufbauteil 4 formschlüssig miteinander verbunden.

Die Rastnasen der weiteren Rastelemente 38a sind beidseitig rund ausgestaltet, so dass es zum Entkoppeln der beiden Bauteile 3, 4 ausreichend ist, eine Zugkraft entlang der Längsachse 10 auszuüben, welche die Rastnasen an der Kante der Rastnut 461 nach innen drückt und so die federelastischen Hebelarme radial nach innen auslenkt.

Zum Aufbau der Baugruppe 11 werden in einem ersten Schritt ein Kopplungsteil 3 und ein Verbindungsteil 3 aufeinander gesteckt und verrastet und so reversibel formschlüssig miteinander verbunden. In einem zweiten Schritt wird ein Verbindungsteil 5 von einem koronalen Ende 402 des Aufbauteils 4 her entlang der Längsachse 10 durch die Längslöcher 31, 42 des Aufbauteils 4 und Kopplungsteils 3 geschoben, bis die Rastnasen der Rastelemente 38 in das Gegenrastelement 56 des Verbindungsteils 5 in Form einer umlaufenden Rastnut 461 einrasten.

Im gezeigten Ausführungsbeispiel sind die weiteren Rastelemente 38a so angeordnet, dass wenn das Verbindungsteil 5 in die Längslöcher 31, 42 eingeführt ist, die Innenseite der Hebelarme der Schnapphaken der weiteren Rastelemente 38a an dem Verbindungsteil 5 anliegen. Eine radiale Auslenkung der weiteren Rastelemente 38a nach innen ist nach dem Einführen des Verbindungsteils 5 nicht mehr möglich. Das Kopplungsteil 3 und das Aufbauteil 4 sind entsprechend erst wieder entkoppelbar, wenn das Verbindungsteil 5 entfernt worden ist.

Die Montage der erfindungsgemässen Baugruppe 11 an einem Basiskörper verläuft analog zu den bisher diskutierten Ausführungsbeispielen.

Da das Kopplungsteil 3 und das Aufbauteil 4 im reversibel gekoppelten Zustand als gemeinsames Bauelement gehandhabt werden können, ist das gezeigte Ausführungsbeispiel insbesondere vorteilhaft, wenn ein Aufbauteil 4 bereits vorab mit einem zum vorgesehenen Basiskörper passenden Kopplungsteil 3 ausgestattet werden soll.

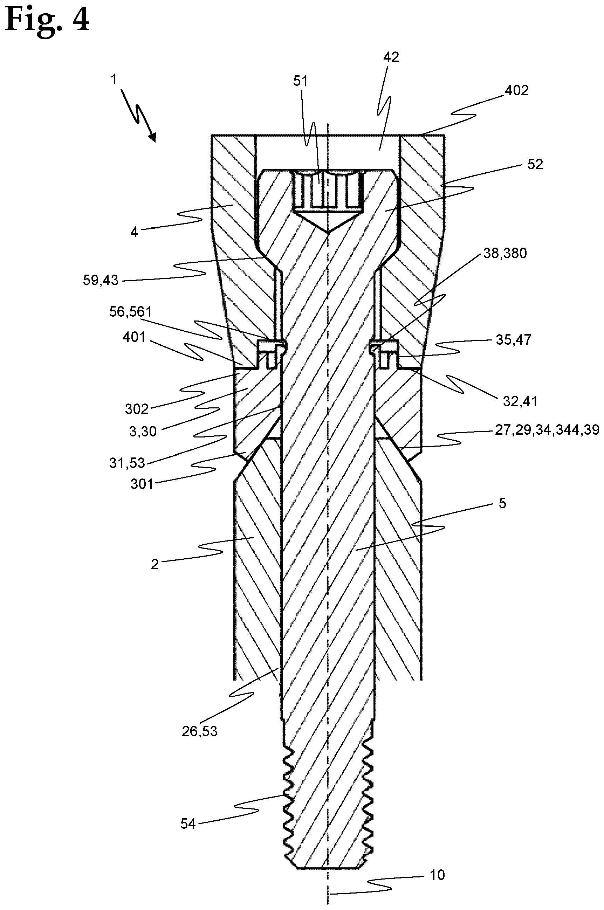

Eine andere Ausführungsform eines erfindungsgemässen Kopplungsteils 3 als Teil eines fertig aufgebauten Dentalimplantats 1 ist in Figur 4 dargestellt.

Der Zusammenbau der erfindungsgemässen Baugruppe 11 und des Dentalimplantats 1 verläuft im Wesentlichen analog zu den vorangehend offenbarten Ausführungsformen.

Das Kopplungsteil 3 weist einen Grundkörper 30 mit einem Längsloch 31 auf. Der Auflage-Abschnitt 34 des Kopplungsteils 3 ist durch die konische-inverse Mantelfläche 344 einer gerade-konischen Vertiefung an einem apikalen Längsende 301 des Kopplungsteils 3 gebildet. Der Auflage-Abschnitt 34 liegt auf der Oberfläche einer gerade-konischen Auflage 27 am koronalen Ende des Basiskörpers 2 auf, so dass an dieser Kontaktstelle 29, 39 der Innenraum des Dentalimplantats 1 dichtend abgeschlossen ist. Das apikale Ende des Basiskörpers ist der Übersichtlichkeit halber wiederum nicht dargestellt.

An dem koronalen Ende 302 des Grundkörpers 30 ist eine ringförmige Dichtfläche 32 angeordnet, und ein Führungselement 35 in Form einer ringförmigen Auskragung steht aus dem Grundkörper 30 hervor. Ein Aufbauteil 4 weist auf der dem Kopplungsteil 3 zugewandten, apikalen Seite 401 eine ringförmige apikale Dichtfläche 41 auf, welche auf der koronalen Dichtfläche 32 des Kopplungsteils aufliegt, so dass an dieser Kontaktstelle die beiden Bauteile 3, 4 dichtend miteinander verbunden sind. Eine zylindrische Vertiefung im Zentrum der apikalen Dichtfläche 41 dient als Führungselement 47. Das Führungselement 35 liegt mit der äusseren Mantelfläche bündig an der Innenseite der Vertiefung 47 an. Wie bei den bereits diskutierten Ausführungsbeispielen stellen die radial aneinander anliegenden Führungselemente 35, 47 zum einen die korrekte Ausrichtung während des Zusammenbaus der Baugruppe sicher, und übertragen zum anderen im zusammengebauten Dentalimplantat 1 radiale Scherkräfte zwischen den beiden Bauteilen 3, 4.

Verteilt um die koronale Öffnung des Längslochs 31 sind mehrere Rastelemente 38 in Form von entlang der Längsachse 10 ausgerichteter Schnapphaken 380 angeordnet. Die Rastnasen der Schnapphaken sind in ein Gegenrastelement 56 des Verbindungsteils 5 in Form einer umlaufenden Rastnut 561 eingerastet.

Ein Gewindeabschnitt 54 des Schafts des Verbindungsteils 5 ist in das Innengewinde (nicht dargestellt) des Basiskörpers 2 eingedreht. Das Kopplungsteil 3 und das Aufbauteil 4 sind zwischen dem Kopfstück 52 des Verbindungsteils 5 und der konischen Auflage 27 des Basiskörpers 2 formschlüssig fixiert und durch das Verbindungsteil 5 in Längsrichtung 10 gegeneinander verspannt.

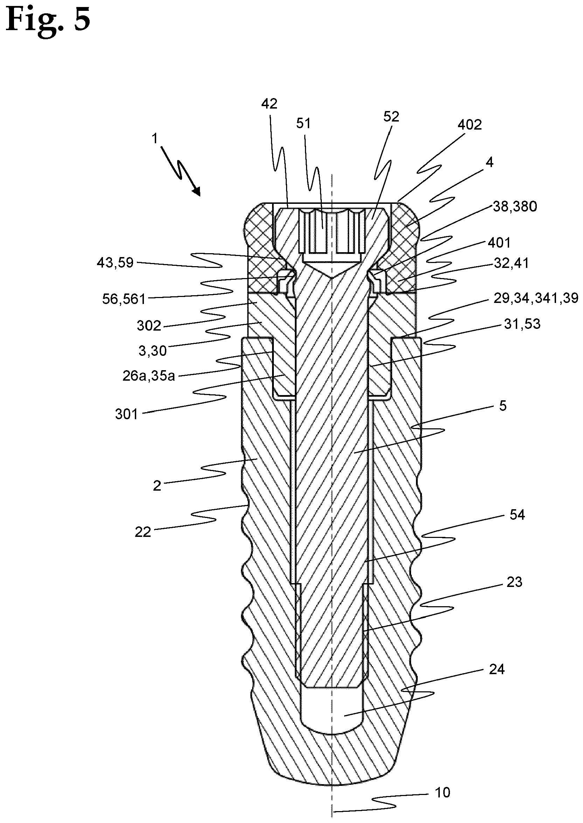

Figur 5 zeigt ein weiteres Ausführungsbeispiel eines erfindungsgemässen Kopplungsteils 3 als Teil eines Dentalimplantates 1. Das Kopplungsteil 3 ist wiederum geeignet, den Basiskörper 2 des Dentalimplantates 1 mit dem Aufbauteil 4 des Dentalimplantates 1 zu verbinden.

Das Kopplungsteil 3 umfasst wie in den vorgängig beschriebenen Ausführungsbeispielen den Grundkörper 30 mit einem Längsloch 31 entlang der Längsachse 10 des Grundkörpers 30. An dem Grundkörper 30 sind mehrere Rastelemente 38 angeordnet. Die Rastelemente 38 sind geeignet mit dem mindestens einen Gegenrastelement 56 des in dem Längsloch 31 anordenbaren Verbindungsteils 5 eine rastende Wirkverbindung einzugehen. Der Auflage-Abschnitt 34 am Grundkörper 30 des Kopplungsteils 3 zur dichten Auflage 29, 39 des Kopplungsteils 3 auf dem Basiskörper 2 ist im Ausführungsbeispiel als plane Fläche 341 senkrecht zur Längsachse 10 des Grundkörpers 30 ausgestaltet, die auf einer analogen planen Auflagefläche am koronalen Ende des Basiskörpers 2 aufliegt.

Wie im Ausführungsbeispiel gezeigt können mehrere plane Flächen in axialer Richtung angeordnet sein. Vorzugsweise ist der Auflage-Abschnitt 34 an welchem das Kopplungsteil auf dem Basiskörper 2 dichtend 29, 39 aufliegt möglichst nahe am Mundraum, beziehungsweise ist der Auflage-Abschnitt 34 radial möglichst weit von der Längsachse 10 des Grundkörpers 30 entfernt. Dadurch wird das Eindringen von Bakterien in das Dentalimplantat 1 oder auch Teile des Implantates möglichst vollständig verhindert.

Die weiteren planen Flächen können der Positionierung oder Ausrichtung des Kopplungsteils 3 gegenüber dem Basiskörper 2 dienen. Durch die planen Flächen 341 des Auflage-Abschnittes 34 werden Kräfte, welche beispielsweise beim Kauen mit dem Dentalimplantat 1 entstehen und entlang der Längsachse 10 des Dentalimplantates 1 wirken direkt vom Kopplungsteil 3 in den Basiskörper 2 übertragen, ohne dass dabei Querkräfte, welche radial wirken, entstehen. Dies ist insbesondre bei Keramikbauteile vorteilhaft, da diese Druckkräfte sehr gut aufnehmen können, jedoch für Scher- oder Zugkräfte weniger gut geeignet sind.

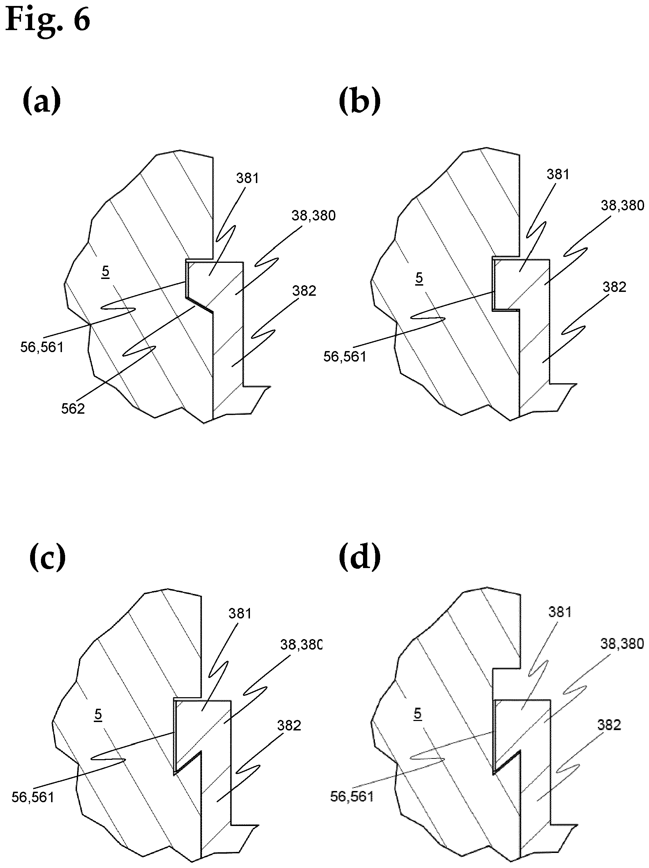

Die vorangehend beschriebene Rastverbindung zwischen den Rastelementen 38, 38', 38", 38‴ eines Kopplungsteils und dem Gegenrastelement 56 eines Verbindungsteils 5 oder den weiteren Rastelementen 38a, 38a' und dem weiteren Gegenrastelement 46 kann sowohl reversibel als auch irreversibel gestaltet werden. Verschiedene Varianten solcher Rastverbindungen sind in Figur 6 gezeigt.

Eine reversibel lösbare Rastverbindung ist in Figur 6(a) dargestellt. Ein Rastelement 38 eines Kopplungsteils 3 ist als Schnapphaken 380 ausgestaltet, mit einem federelastischen Hebelarm 382 und einer am freien Ende des Hebelarms angebrachten Rastnase 381. Die Rastnase 381 ist in einem Gegenrastelement 56 eines Verbindungsteils 5 eingerastet, wobei das Gegenrastelement 56 als Rastnut 561 ausgestaltet ist.

Die Rastnase 381 weist an einer dem Hebelarm zugewandten Seite eine zur Achse des Hebelarms geneigte Rampe auf, und auf der vom Hebelarm abgewandten Seite eine Stirnfläche senkrecht zur Achse des Hebelarms. Analog weist die Rastnut 561 auf der einen Seite eine Rampe 562 auf, und auf der anderen Seite eine senkrechte Wand. Ein solche Rastverbindung kann wieder gelöst werden, indem eine entlang dem Hebelarm nach unten wirkende Zugkraft angelegt wird, die ausreichend ist, die Rastnase 381 auf der Rampe 562 gleitend nach aussen auszulenken, unter Überwindung der entsprechenden radialen Federkraft des Hebelarms 382.

Ein Lösen der Verbindung kann beispielsweise verhindert werden, indem ein Auslenken des Rastelementes blockiert oder verhindert wird, beispielsweise indem der Raum zum radialen Auslenken der Rastnase 381 aus der Rastnut 561 nicht zur Verfügung gestellt wird, Dies kann beispielsweise erreicht werden, indem ein Verbindungsteil 5 in ein Längsloch eingeführt wird, so dass die Rastelemente in radialer Richtung blockiert sind. Somit kann die Verbindung zwischen dem Kopplungsteil 3 und dem Aufbauteil 4 erst nach dem Entfernen des Verbindungsteils 5 aus dem Längsloch 31 wieder gelöst werden.

Eine bedingt reversibel lösbare Rastverbindung ist in Figur 6(b) dargestellt. Sowohl die beiden Stirnflächen der Rastnase 381 des Rastelements 38 als auch die beiden Wände der Rastnut 561 des Gegenrastelements 56 sind senkrecht zur Achse des Hebelarms ausgerichtet. Eine solche Rastverbindung löst sich auch unter Zug nicht zwingend zerstörungsfrei. Jedoch ist es möglich, beispielsweise mit einem passenden Werkzeug den Hebelarm 382 radial auszulenken, um so die Rastnase 381 aus der Rastnut 561 herauszuheben und so die Rastverbindung wieder zu lösen.

Figur 6(c) zeigt eine Rastverbindung, die in Längsrichtung unlösbar ist, da sie in Form eines Bajonettverschlusses erstellt wird. Die untere Wand der Rastnut 561 ist schräg hinterschnitten. Die Stirnseite der Rastnase 381 auf der Seite des Hebelarms 382 wiederum weist eine umgekehrte Rampe auf.

Zu Schliessen der Rasterbindung wird analog zu einem Bajonettverschluss das Verbindungsteil 5 und das Kopplungsteil 3 um einen gewissen Winkel in die Längsachse verdreht gekoppelt, wobei eine nicht hinterschnittene Rastvertiefung (nicht gezeigt) im Verbindungsteil 5, analog beispielsweise zu Figur 6(b), die Rastnase 561 aufnimmt. Diese Vertiefung steht entlang des Umfangs in Verbindung zu einer hinterschnittenen Rastnut 561, so dass durch Drehen des Verbindungsteils 5 gegenüber dem Kopplungsteil 3 um die Längsachse die Rastnase 381 in die hinterschnittene Rastnut 561 eingedreht wird.

Auf Zug wird die Rastnase 381 zum Verbindungsteil hin ausgelenkt. Ein zerstörungsfreies, reversibles Lösen der Rastverbindung ist also nicht möglich. Auch ein Lösen der Rastverbindung auf Druck ist nicht möglich, denn die Rastnase 381 ist in der hinterschnittenen Rastnut 561 formschlüssig gehalten. Nur durch Herausdrehen der Rastnase 381 aus der Rastnut 561 in die nicht hinterschnittene Vertiefung des Verbindungsteils 5 ist die Rastverbindung lösbar, was jedoch eine gezielte Manipulation voraussetzt.

Figur 6(d) schliesslich zeigt eine Rastverbindung, die ebenfalls im Wesentlichen unlösbar ist. Die untere Wand der Rastnut 561 ist schräg hinterschnitten. Die Stirnseite der Rastnase 381 auf der Seite des Hebelarms 382 weist eine umgekehrte Rampe auf.

Auf Zug wird die Rastnase 381 zum Verbindungsteil hin ausgelenkt. Ein zerstörungsfreies, reversibles Lösen der Rastverbindung ist somit nicht möglich. Auch ein manuelles Lösen der Rastverbindung ist nicht möglich, denn die Rastnase 381 ist in der hinterschnittenen Rastnut 561 formschlüssig gehalten.

Nicht lösbare oder beding lösbare Rastverbindungen haben den Vorteil, dass sich beim Ausbau einer Baugruppe 11 aus dem Dentalimplantat die Bauteile der Baugruppe nicht ungewollt voneinander lösen. Eine reversible Rastverbindung wiederum hat den Vorteil, dass eine Baugruppe 11 leichter wieder zerlegt werden kann.

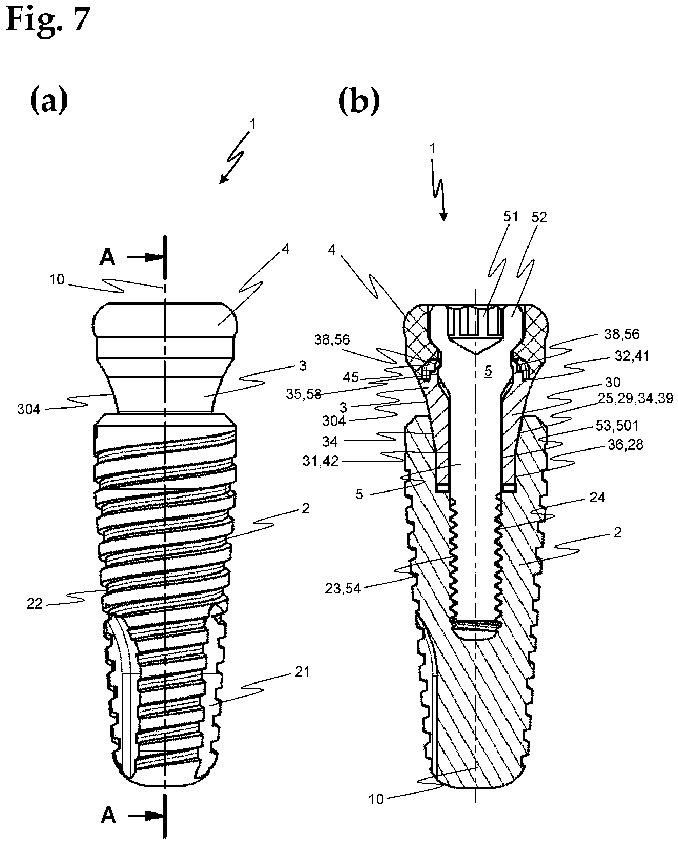

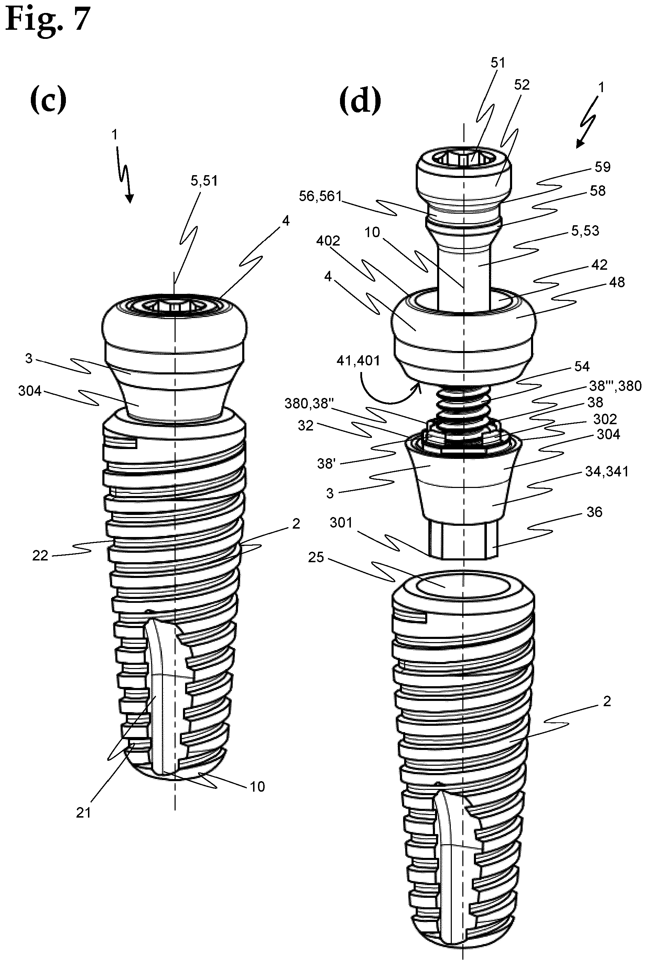

Eine weiteres vorteilhaftes Ausführungsform eines erfindungsgemässen Dentalimplantats 1 und seiner Einzelteile wird in den Figuren 7, 8 und 9 beschrieben.

Ein Basiskörper 2 des Dentalimplantats 1 umfasst ein konisches Aussengewinde 22 und in einem apikalen Bereich ein vorgelagertes Schneidgewinde 21 für das Aussengewinde. Der Basiskörper 2 wird in das Knochengewebe eines Patienten implantiert, indem das Schneidgewinde 21 und das nachfolgende Aussengewinde 22 in eine vorbereitete Bohrung im Knochengewebe eingedreht werden. Entlang einer Längsachse 10 ist im Basiskörper 2 ein Sackloch 24 mit einem zylindrischen Innengewinde 23 angeordnet. Im Bereich der koronalen Öffnung des Sacklochs ist eine Aufnahme 25 in der Form eines invertierten geraden Kegelstumpfs angeordnet. Zwischen dem Innengewinde 23 und der konischen Aufnahme 25 kann beispielsweise wie im gezeigten Ausführungsbeispiel ein Rotationssicherungsabschnitt 28 angeordnet sein.

Der Grundkörper 30 eines Kopplungsteils 3 umfasst im gezeigten Ausführungsbeispiel an seinem apikalen Längsende 301 einen Rotationssicherungsabschnitt 36, einen mittleren Auflage-Abschnitt 34 in Form eines geraden Kegelstumpfs, und an seinem koronalen Längsende 302 einen Übergangsabschnitt 304. Ein Längsloch 31 verläuft entlang der Längsachse 10. Am koronalen Längsende 302 des Kopplungsteils 3 ist an der äusseren Kante in einer Ebene senkrecht zur Längsachse 10 eine ringförmige Dichtfläche 32 angeordnet. Auf der koronalen Stirnfläche stehen parallel zur Längsachse vier Rastelemente 38, 38', 38", 38'" vor, in Form eines Schnapphakens 380 mit einem Hebelarm 382 und einer zur Längsachse 10 gerichteten Rastnase 381.

Alternativ kann der Auflage-Abschnitt 34 auch die Form eines gekrümmten Kegelstumpfs aufweisen. Die Aufnahme 25 des Basiskörper 2 kann dann ebenfalls entsprechend konisch gekrümmt ausgeführt sein.

Auflage-Abschnitt 34 und Übergangsabschnitt 304 können auch als Abschnitte eines gemeinsamen geraden oder gekrümmten Kegelstumpfs ausgebildet sein.

Ein Aufbauteil 4 weist ein Längsloch 42 auf, mit einer ersten Aufnahme 44 an einem koronalen Längende 402 des Aufbauteils 4, einer zweiten Aufnahme 45 an einem apikalen Längsende 401, und einer dazwischen angeordneten konischen Stützfläche 43. Am apikalen Längsende 401 ist um die zweite Aufnahme 45 herum in einer Ebene senkrecht zur Längsachse 10 eine ringförmige Dichtfläche 41 vorhanden. Am koronalen Längsende 402 ist das Aufbauteil 4 als Lokator eines Lokator-Befestigungssystems ausgestaltet, mit einem ringförmigen Wulst 48.

Ein Verbindungsteil 5 umfasst einen zylindrischen Schaft 57 und ein Kopfstück 52. Der Schaft 57 weist an einem apikalen Ende einen Gewindeabschnitt 54 auf, und daran anschliessend einen Stützabschnitt 53. Das Kopfstück 52 weist im gezeigten Beispiel ein Eingriffsmittel 51 in Form einer Vertiefung mit sternförmiger Innenkontur auf, in welches mit einem passenden Drehwerkzeug eingegriffen werden kann, um eine Drehkraft um die Längsachse 10 des Verbindungsteils 5 auszuüben. Zwischen dem Stützabschnitt 53 und dem Kopfstück 52 ist ein Führungsabschnitt 58, ein Gegenrastelement 56 in Form einer umlaufenden Rastnut 561 und ein konischer Auflageabschnitt 59 angeordnet.

Im montierten Dentalimplantat 1 liegt der Auflage-Abschnitt 34 des Kopplungsteils 3 bündig dichtend auf der Oberfläche der beispielsweise konischen Aufnahme 25 des Basiskörpers 2 auf. Es resultiert eine radiale Abstützung der beiden Bauteile 2, 3 und eine Abdichtung des Innenraums des Dentalimplantats 1 an der entsprechenden Kontaktstelle der Bauteile 2, 3. Die Aussenkontur des Rotationssicherungsabschnitt 36 des Kopplungsteil 3 kann in formschlüssiger Wechselwirkung zu einer Innenkontur des Rotationssicherungsabschnitts 28 des Basiskörpers 2 stehen, so dass die rotatorische Ausrichtung des Kopplungsteil 3 zum Basiskörper 2 fixiert ist. Je nach Ausgestaltung der Konturen der entsprechenden Rotationssicherungsabschnitte 28, 36 sind mehrere oder auch nur eine Ausrichtung möglich.

Die apikale Dichtfläche 41 des Aufbauteils 4 liegt auf der koronalen Dichtfläche 32 des Kopplungsteils 3 auf, so dass das Dentalimplantat 1 an dieser Kontaktstelle der beiden Bauteile 3, 4 dichtend abgeschlossen ist. Der Übergangsabschnitt 304 des Kopplungsteils 3 bildet mit der daran anschliessenden Mantelfläche des Aufbauteils 4 eine im Wesentlichen kantenlose Oberfläche. Die Schnapphaken 380 der vier Rastelemente 38, 38', 38", 38‴ sind in der Rastnut 561 des Gegenrastelements 56 des Verbindungsteils 5 eingerastet.

Im zusammengebauten Dentalimplantat 1 ist der Gewindeabschnitt 54 des Verbindungsteils 5 im Innengewinde 23 des Basiskörpers 2 eingeschraubt. Der Stützabschnitt 53 des Verbindungsteils 5 stütz sich auf der Innenseite des Längslochs 31 des Kopplungsteils 3 ab. Ebenso stütz sich der Führungsabschnitt 58 des Verbindungsteils 5 radial auf dem Führungselement 35 des Verbindungsteils ab. Der konische Auflageabschnitt 59 des Verbindungsteils 5 liegt auf der Stützfläche 43 des Aufbauteils 4 auf. Das Aufbauteil 4 ist so radial auf dem Verbindungsteil 5 abgestützt. Im Gegensatz zu den vorhergehen diskutierten Ausführungsbeispielen der Erfindung erfolgt keine radiale Abstützung des Aufbauteils 4 direkt auf dem Kopplungsteil 3. Stattdessen werden radiale Scherkräfte vom Aufbauteil 4 indirekt über das Verbindungsteil 5 auf den Basiskörper 2 übertragen.

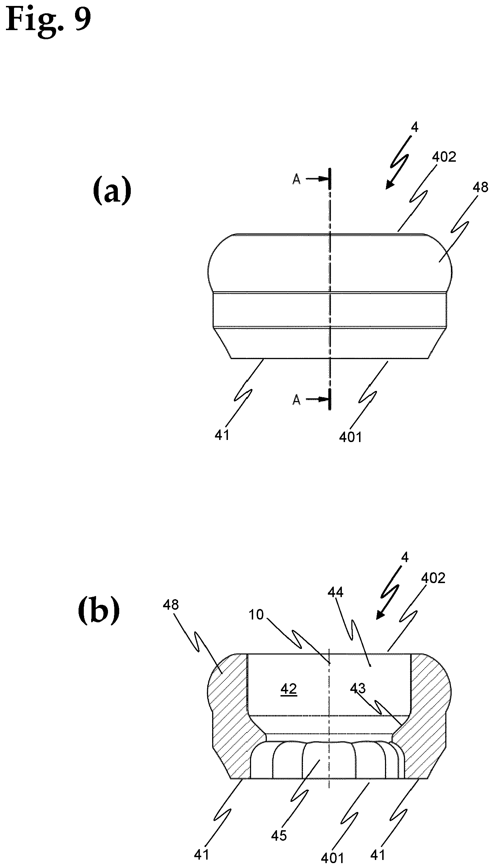

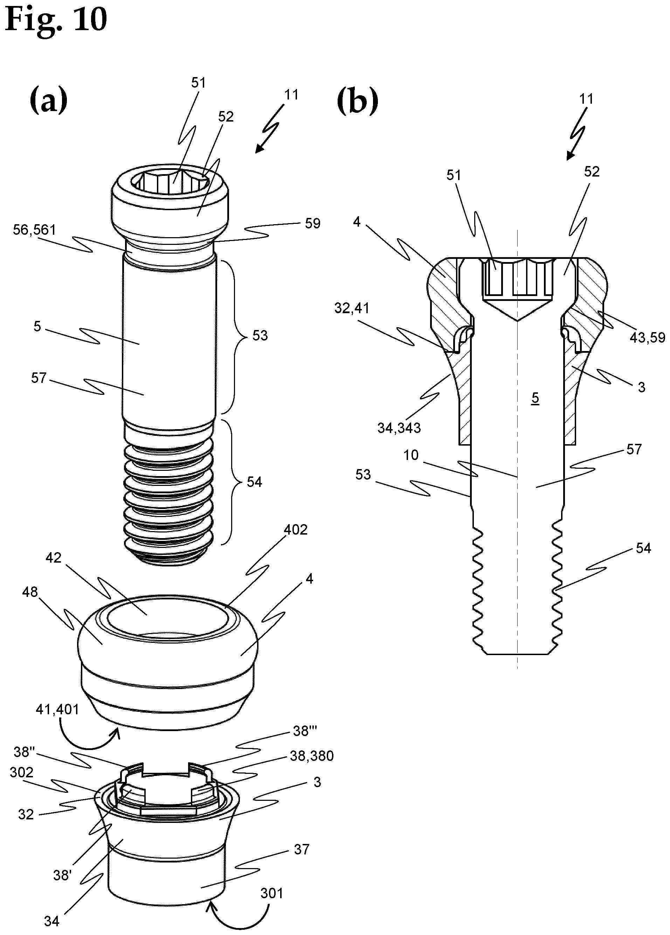

Ein anderes vorteilhaftes Ausführungsbeispiel einer erfindungsgemässen Baugruppe 11 und seiner einzelnen Bauteile ist in Figur 10 offenbart. Das Aufbauteil 4 des gezeigten Dentalimplantats 1 ist identisch zum Aufbauteil 4 der Figur 9. Dies zeigt auf, dass ein erfindungsgemässes Kopplungsteil 3 es vorteilhaft erlaubt, ein Aufbaute 4 mit verschiedenen Typen von Basiskörpern 2 zu verbinden, indem ein zu dem Aufbauteil und dem damit zu kombinierenden Basiskörper angepasstes Kopplungsteil bereitgestellt wird.

Ein Kopplungsteil 3 weist einen Grundkörper 30 mit einem Längsloch 31 entlang der Längsachse 10 auf. Der Grundkörper 30 umfasst aussen einen Auflage-Abschnitt 34 und einen zylindrischen Stützabschnitt 37. Der Auflage-Abschnitt 34 hat die Form eines gekrümmten Kegelstumpfs. Am koronalen Längsende 302 des Kopplungsteils 3 ist an der äusseren Kante in einer Ebene senkrecht zur Längsachse 10 eine ringförmige koronale Dichtfläche 32 angeordnet. Parallel zur Längsachse stehen vier Rastelemente 38, 38', 38", 38‴ aus der koronalen Stirnfläche vor, in Form eines Schnapphakens 380 mit einem Hebelarm 382 und einer nach innen gerichteten Rastnase 381.

Der Auflage-Abschnitt 34 des Kopplungsteils 3 ist dazu vorgesehen, in einem zusammengebauten Dentalimplantat bündig dichtend auf der Oberfläche einer analog geformten gekrümmt-konischen Aufnahme 25 eines Basiskörpers 2 aufzuliegen. Es resultiert eine radiale Abstützung der beiden Bauteile und eine Abdichtung des Innenraums des Dentalimplantats an der entsprechenden Kontaktstelle der Bauteile. Der Stützabschnitt 37 Kopplungsteil 3 ist dazu vorgesehen, sich radial an einer Innenwand eines zylindrischen Stützabschnitts eines Basiskörpers 2 abzustützen.

Bezüglich des Aufbauteils 4 wird auf die entsprechenden Ausführungen zu Figur 9 verwiesen.

Ein Verbindungsteil 5 umfasst einen zylindrischen Schaft 57 und ein Kopfstück 52. Der Schaft 57 weist an einem apikalen Ende einen Gewindeabschnitt 54 auf, und daran anschliessend einen Stützabschnitt 53. Das Kopfstück 52 kann, wie im gezeigten Ausführungsbeispiel ein Eingriffsmittel 51 in Form einer Vertiefung mit sternförmiger Innenkontur aufweisen, in welches mit einem passenden Drehwerkzeug eingegriffen werden kann. Zwischen dem Stützabschnitt 53 und dem Kopfstück 52 ist ein Gegenrastelement 56 angeordnet. Dieses kann wie gezeigt in Form einer umlaufenden Rastnut 561 und ein konischer Auflageabschnitt 59 ausgestaltet sein.

In der zusammengebauten Baugruppe 11 liegt die apikale Dichtfläche 41 des Aufbauteils 4 in einem Auflageabschnitt auf der koronalen Dichtfläche 32 des Kopplungsteils 3 auf, so dass im fertig zusammengebauten Zustand das Dentalimplantat 1 an dieser Kontaktstelle der beiden Bauteile 3, 4 dichtend abgeschlossen sind. Die Schnapphaken 380 der Rastelemente 38, 38', 38", 38‴ sind in der Rastnut 561 des Gegenrastelements 56 des Verbindungsteils 5 eingerastet. Ein oberer Teil des Stützabschnitts 53 des Verbindungsteils 5 stütz sich auf der Innenseite des Längslochs 31 des Kopplungsteils 3 ab.

Der konische Auflageabschnitt 59 des Verbindungsteils 5 liegt auf der konischen Stützfläche 43 des Aufbauteils 4 auf, welches so radial auf dem Verbindungsteil 5 abgestützt ist.

Der Gewindeabschnitt 54 des Verbindungsteils 5 ist dazu vorgesehen, in ein Innengewinde eines Basiskörpers 2 eingeschraubt zu werden. Ein unterer Teil des Stützabschnitt 53 des Verbindungsteils 5, der nicht innerhalb des Kopplungsteils 3 liegt, kann dazu vorgesehen sein, bündig in einen gewindelosen Abschnitt des Sacklochs eines Basiskörpers 2 an der Innenwand anzuliegen.

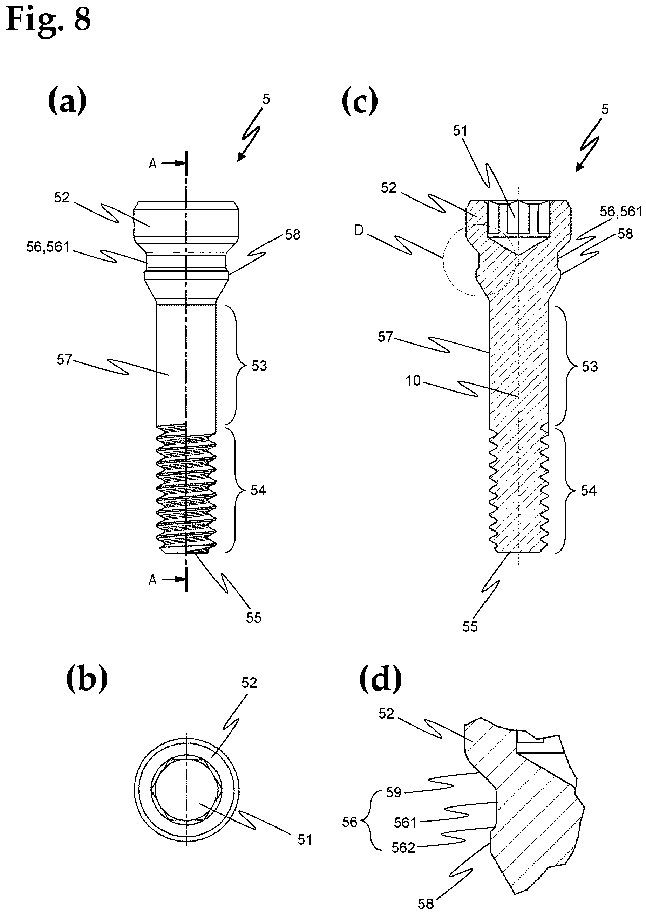

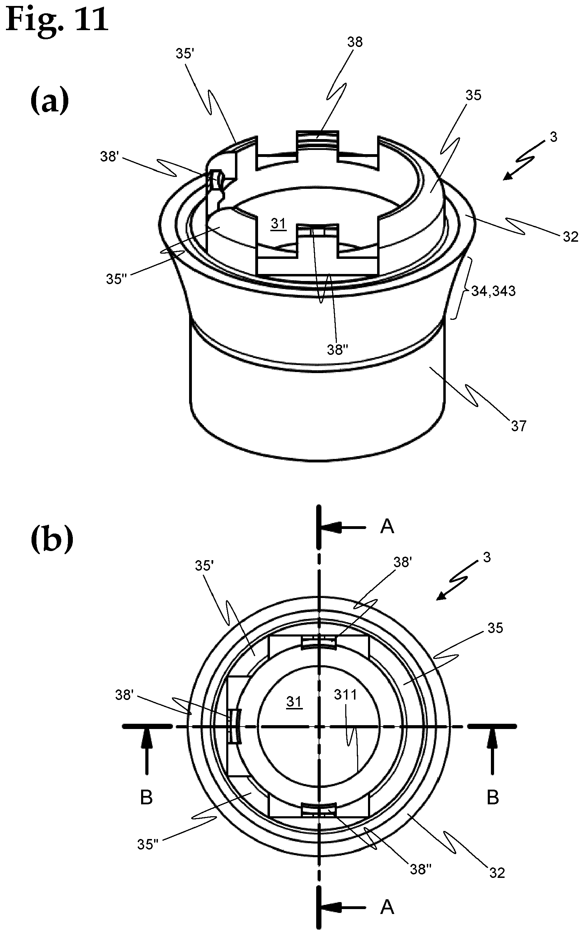

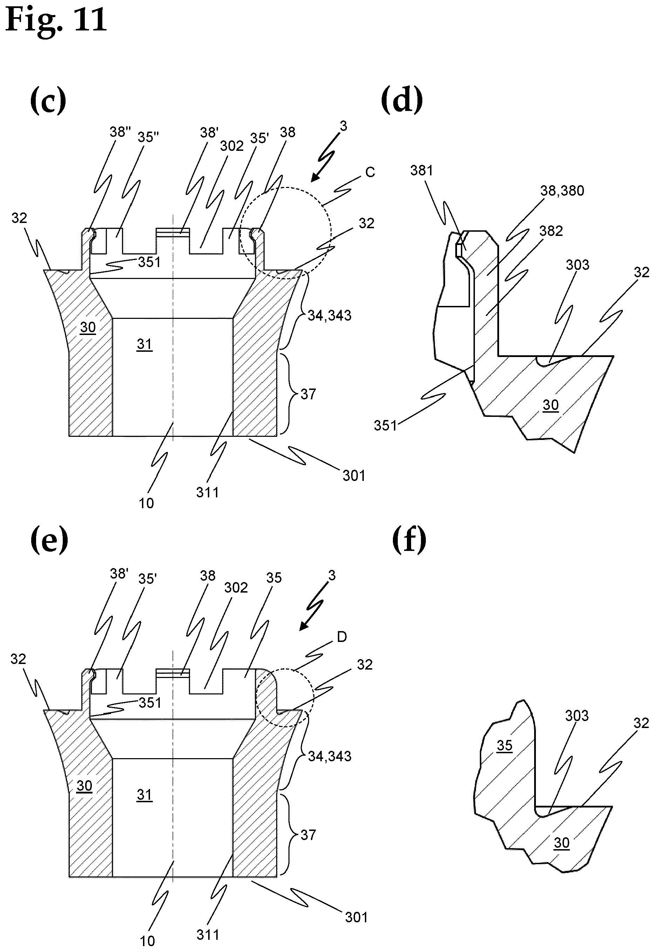

In Figur 11 ist eine weitere vorteilhafte Ausführungsform eines erfindungsgemässen Kopplungsteil 3 gezeigt, welches dazu geeignet ist, mit einem Verbindungsteil 5 und einem Aufbauteil 4 gemäss der bereits besprochenen Figuren 8 und 9 zu einer erfindungsgemässen Baugruppe zusammengebaut zu werden.

Der Grundkörper 30 des dargestellten Kopplungsteils 3 umfasst einen gekrümmt-konischen Auflage-Abschnitt 34 und einen daran anschliessenden zylindrischen Stützabschnitt 37. Der Auflage-Abschnitt 34 und der zylindrischen Stützabschnitt 37 sind dazu vorgesehen, wie bei dem vorangegangenen Ausführungsbeispiel besprochen mit einer gekrümmt-konischen Aufnahme beziehungsweise mit einem daran anschliessenden Stützabschnitt eines Basiskörpers in Wirkverbindung zu stehen.

Ein Längsloch 31 verläuft entlang der Längsachse 10 von einem apikalen Längsende 301 zu einem koronalen Längsende 302. Eine ringförmige Dichtfläche 32 verläuft entlang der äusseren Kante der koronalen Stirnfläche des Kopplungsteils 3. Aus einer zylindrischen Auskragung sind drei Führungselemente 35, 35', 35" gebildet. Diese Führungselemente erlauben zum einen das korrekte Einführen des Kopplungsteils 4 in eine entsprechende apikale Ausnehmung 45 des Aufbauteils 4. Zum anderen stützt sich in einem zusammengebauten Dentalimplantat ein Führungsabschnitt 58 des Verbindungsteils 5 radial auf der unteren, durchgehenden Mantelfläche 351 der Führungselemente.

Drei Rastelemente 38, 38', 38" sind zwischen den Führungselementen angeordnet. Die Rastelemente in Form eines Schnapphakens 380 umfassen jeweils einen federelastischen Federarm 382 und eine zur Innenseite zeigende Rastnase 381, welche dazu vorgesehen ist, in der Rastnut 561 des Rastelements 56 des Verbindungsteils 5 einzurasten.

Wie auch die bereits besprochenen erfindungsgemässen Kopplungsteile 3 ist auch das dargestellte Kopplungsteil 3 vorzugsweise aus Metall gefertigt, insbesondere aus Titan. Aus der zylindrischen Auskragung können die Führungselemente 47 und die Rastelemente gefertigt, beispielsweise ausgefräst werden. Wenn der Übergang zwischen dem Führungselement 35, 35', 35" und koronalen Längsende 302 des Kopplungsteils 3 einen Eckradius aufweist, kann das Aufbauteil 4 nicht dicht auf dem Kopplungsteil 3 aufliegen. Ein solcher Eckradius kann beispielsweise entstehen, wenn das Bearbeitungswerkzeug nicht oder nicht mehr scharf geschliffen ist. Da die Innenwände des Längslochs 42 des Aufbauteils 4 an den Führungselementen 35, 35', 35" anliegt, steht der untere Teil des Längslochs 42 auf dem Eckradius auf. Dadurch könnte die apikale Dichtfläche 41 des Aufbauteils 4 nicht dicht auf der koronalen Dichtfläche 32 des Kopplungsteils 3 aufliegen. Zusätzlich wäre durch den Eckradius die Zentrierlänge beziehungsweise die Führungslänge des Aufbauteils 4 an den Führungselementen 35, 35', 35" verkürzt. An der Basis der Führungselemente 35, 35', 35" ist deshalb vorzugsweise ein Drehfreistich 303 angeordnet. Durch den Drehfreistich 303 am koronalen Längsende 302 des Kopplungsteils 3 im Bereich des Führungselementes 35, 35', 35" kann verhindert werden, dass durch einen radialen Übergang zwischen dem Führungselement 35, 35', 35" und dem koronalen Ende 302 des Kopplungsteils 3 das Aufbauteil 4 nicht dicht auf der koronalen Dichtfläche 32 des Kopplungsteils 3 aufliegen kann und damit beispielsweise Bakterien zwischen Kopplungsteil 3 und Aufbauteil 4 eindringen können. Zusätzlich dient so das Führungselement 35, 35', 35" über seine gesamte Höhe der Führung und Ausrichtung zwischen Kopplungsteil 3 und des Aufbauteils 4. Durch den Drehfreistich 303 wird zusätzlich ein scharfer rechter Winkel zwischen Führungselement 35 und koronaler Dichtfläche 32 vermieden (vgl. Figur 11(f)). Rechte Winkel sind Spannungstechnisch ungünstig, da sie eine gewisse Kerbwirkung haben, welche bei Belastungen anfällig auf Risse insbesondere Haarrisse sind. Ferner kann durch den Drehfreistich 303 die koronale Dichtfläche 32 beispielsweise mit einer Schleifscheibe vollständig bearbeitet werden. Der Drehfreistich 303 definiert die Grenze der Dichtfläche.

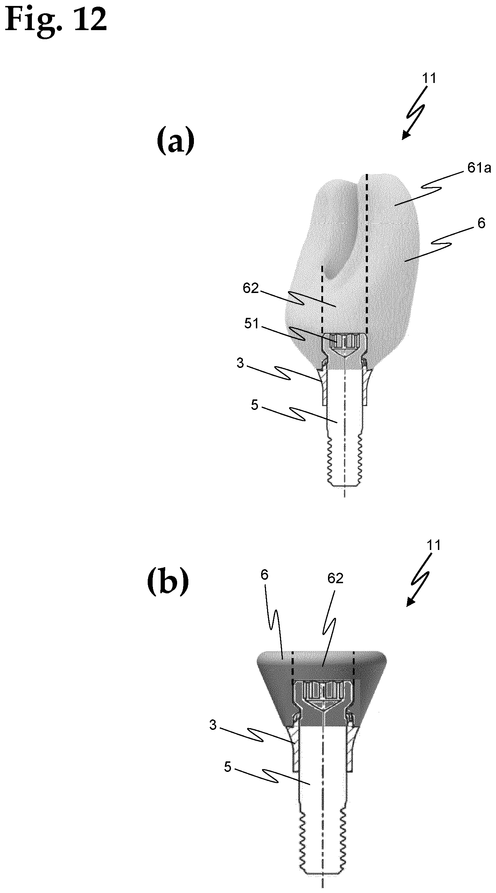

Anstelle eines Aufbauteils 4, auf dem gegebenenfalls wiederum ein weiteres Bauteil befestigt werden kann, wie in den vorangegangenen Ausführungsbeispielen, kann auch direkt eine Suprastruktur 6 mit dem Kopplungsteil 3 verbunden werden. Die Suprastruktur 6 kann somit auch als ein Aufbauteil 4 gesehen werden. So zeigt beispielsweise Figur 12(a) eine Baugruppe 11 umfassend eine Suprastruktur 6 in Form einer Einzelzahnprothese beziehungsweise einer Krone, sowie ein Kopplungsteil 3 wie in den Figuren 11 und ein Verbindungsteil 5 wie in Figur 8 gezeigt. Die Suprastruktur 6 entspricht somit einem integralen Bauteil mit Aufbauteil und Aufbau. Das Eingriffsmittel 51 des Verbindungsteils 5 ist durch ein Längsloch 62 von oben zugänglich. Nach der Endmontage kann das Längsloch 62 verfüllt werden.

Figur 12(b) zeigt eine Baugruppe 11 mit einer Suprastruktur 6 in Form eines Einheilelements, nämlich eines Gingivaformers. Ein solches Bauteil wird nach erfolgter Implantation eines Basiskörpers im Knochengewebe eines Patienten vorübergehend auf dem Basiskörper montiert, um zum einen den Innenraum des Dentalimplantats abzuschliessen, und zum anderen das Zahnfleisch beim Einheilen des Basiskörpers zu formen und entsprechend auch als Platzhalter für den definitiven Aufbau zu dienen.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

### Bezugszeichenliste

- 1: Dentalimplantat
- 10: Längsachse
- 11: Baugruppe
- 2: Basiskörper
- 21: Schneidgewinde
- 22: Aussengewinde
- 23: Innengewinde
- 24: Bohrung, Sackloch
- 25: konische Aufnahme
- 26: Stützabschnitt
- 26a: Stützabschnitt
- 27: konische Auflage
- 28: Rotationssicherungsabschnitt
- 29: koronale Dichtfläche
- 3: Kopplungsteil
- 30: Grundkörper
- 301: apikales Längsende
- 302: koronales Längsende
- 303: Drehfreistich
- 304: Übergangsabschnitt
- 31: Längsloch
- 311: Stützabschnitt
- 32: koronale Dichtfläche
- 33: oberer Abschnitt
- 34: Auflage-Abschnitt
- 341: plane Auflagefläche
- 342: gerade-konische Mantelfläche
- 343: gekrümmt-konische Mantelfläche
- 344: invertiert-konische Mantelfläche
- 35, 35', 35": Führungselement
- 351: Mantelfläche der Führungselemente
- 35a: Führungselement
- 36: Rotationssicherungsabschnitt
- 37: Stützabschnitt
- 38, 38', 38", 38‴: Rastelement
- 38a, 38a': weiteres Rastelement
- 380: Schnapphaken
- 381: Rastnase
- 382: federelastischer Hebelarm
- 39: apikale Dichtfläche
- 4: Aufbauteil
- 401: apikales Längsende
- 402: koronales Längsende
- 41: apikale Dichtfläche
- 42: Längsloch
- 43: konische Stützfläche
- 44: erste Aufnahme
- 45: zweite Aufnahme
- 46: weiteres Gegenrastelement
- 461: weitere Rastnut
- 47: Führungselement
- 48: ringförmiger Wulst
- 5: Verbindungsteil
- 51: Eingriffsmittel
- 52: Kopfstück
- 53: Stützabschnitt
- 54: apikaler Gewindeabschnitt
- 55: apikales Ende
- 56: Gegenrastelement
- 561: Rastnut
- 562: Rampe
- 57: Schaft
- 58: Führungsabschnitt
- 59: konischer Auflageabschnitt
- 6: Suprastruktur
- 61a: Zahnersatz, Krone
- 61b: Gingivaformer, Einheilelement
- 62: Längsloch

## Patentansprüche

1. Kopplungsteil (3) zum Verbinden eines Basiskörpers (2) eines Dentalimplantats (1) mit einem Aufbauteil (4) des Dentalimplantats (1), umfassend
einen Grundkörper (30),
ein Längsloch (31) entlang einer Längsachse (10) des Grundkörpers (30), mindestens ein Rastelement (38, 38', 38", 38"'), welches dazu geeignet ist, mit mindestens einem Gegenrastelement (56) eines in dem Längsloch (31) anordenbaren Verbindungsteils (5) eine rastende Wirkverbindung einzugehen, und
einen Auflage-Abschnitt (34) zur dichtenden Auflage des Kopplungsteils (3) auf dem Basiskörper (2).

2. Kopplungsteil (3) nach Anspruch 1, wobei der Auflage-Abschnitt (34) am Grundkörper (30) des Kopplungsteils (3) als plane Fläche (341) senkrecht zur Längsachse (10) des Grundkörpers (30) oder als Mantelfläche (342) eines zur Längsachse (10) fluchtenden geraden Kegelstumpfs oder als Mantelfläche (343) eines zur Längsachse (10) fluchtenden gekrümmten Kegelstumpfs oder als Mantelfläche einer zur Längsachse (10) fluchtenden konischen Vertiefung im Grundkörper (30) ausgestaltet ist.

3. Kopplungsteil (3) nach einem der vorangegangenen Ansprüche, wobei das mindestens eine Rastelement (38, 38', 38", 38‴) als elastisches Rastelement ausgestaltet ist.

4. Kopplungsteil (3) nach einem der vorangegangenen Ansprüche, wobei an einem koronalen Längsende (302) und/oder an einem apikalen Längsende (301) des Grundkörpers (30) mindestens ein Rastelement (38, 38', 38", 38‴) vorgesehen ist.

5. Kopplungsteil (3) nach einem der vorangegangenen Ansprüche, wobei das mindestens eine Rastelement (38, 38', 38", 38‴) als ein parallel zur Längsachse (10) an den Grundkörper (30) angeformter Schnapphaken (380) ausgestaltet ist.

6. Kopplungsteil (3) nach einem der vorangegangenen Ansprüche, wobei an einem koronalen Längsende (302) des Grundkörpers (30) mindestens ein Führungselement (35, 35', 35") vorgesehen ist, welches dazu geeignet ist, das Kopplungsteil (3) gegenüber einem Aufbauteil (4) eines Dentalimplantats (1) zur Längsachse (10) fluchtend auszurichten.

7. Kopplungsteil (3) nach einem der vorangehenden Ansprüche, wobei am koronalen Längsende (302) des Kopplungsteils (3) im Bereich des Führungselementes (35, 35', 35") ein Drehfreistich (303) ausgebildet ist.

8. Kopplungsteil (3) nach einem der vorangehenden Ansprüche, wobei die Oberflächen des Kopplungsteils (3) im Auflage-Abschnitt (34) G1-Stetigkeit aufweist, und vorteilhaft G2-Stetigkeit.

9. Kopplungsteil (3) nach einem der vorangegangenen Ansprüche, wobei an einem koronalen Längsende (302) des Grundkörpers (30) eine plane, ringförmige koronale Dichtfläche (32) senkrecht zur Längsachse (10) des Grundkörpers (30) vorgesehen ist.

10. Kopplungsteil (3) nach einem der vorangegangenen Ansprüche, wobei an einem koronalen Längsende (302) und/oder an einem apikalen Längsende (301) des Grundkörpers (30) ein Rotationssicherungsabschnitt (36) mit einer nicht-rotationssymmetrischen Aussenkontur vorgesehen ist.

11. Baugruppe (11) für ein modulares Dentalimplantat (1), mit
einem Aufbauteil (4),
einem Verbindungsteil (5) zum formschlüssigen Verbinden des Aufbauteils (4) mit einem zur Implantation im Knochengewebe eines Patienten vorgesehenen Basiskörper (2), und
einem Kopplungsteil (3) nach einem der Ansprüche 1 bis 10,
wobei das Aufbauteil (4), das Verbindungsteil (5) und das Kopplungsteil (3) entlang einer gemeinsamen Längsachse (10) fluchtend angeordnet sind,
wobei das Verbindungsteil (5) in einem Längsloch (31) des Kopplungsteils (3) und einem Längsloch (42, 63) des Aufbauteils (4) anordenbar ist, und
wobei das Kopplungsteil (3), das Verbindungsteil (5) und das Aufbauteil (4) formschlüssig miteinander verbindbar oder verbunden sind.

12. Baugruppe (11) nach Anspruch 11, wobei das Verbindungsteil (5) mindestens ein Gegenrastelement (56) aufweist, welches mit mindestens einem Rastelement (38, 38', 38", 38"') des Kopplungsteils (3) in Wirkverbindung steht oder bringbar ist.

13. Modulares Dentalimplantat (1) mit einem Basiskörper (2) zur Implantierung in einem Knochengewebe eines Patienten sowie einer Baugruppe (11) nach einem der Ansprüche 10 oder 11.

14. Kit für den Aufbau einer Baugruppe (11), umfassend mindestens ein Aufbauteil (4), mindestens ein Verbindungsteil (5) sowie mindestens ein Kopplungsteil (3), sowie sie in einer Baugruppe (11) nach einem der Ansprüche 10 oder 11 definiert sind.

15. Kit für den Aufbau eines modularen Dentalimplantats (1), umfassend mindestens einen Basiskörper (2), mindestens ein Aufbauteil (4), mindestens ein Verbindungsteil (5) sowie mindestens ein Kopplungsteil (3), sowie sie in einem Dentalimplantat (1) nach Anspruch 14 definiert ist.
